# EUROPEAN PATENT SPECIFICATION

(11) **EP 3 483 646 B1**
(45) Date of publication and mention of the grant of the patent: **02.06.2021**
(21) Application number: 16914537.2
(22) Date of filing: 31.08.2016
(51) Int. Cl.: G02B 27/28, G02B 6/12, G02B 6/126, G02B 6/27, G02B 6/293

(54) **OPTICAL SIGNAL PROCESSING METHOD AND OPTICAL DEVICE**
VERFAHREN ZUR VERARBEITUNG OPTISCHER SIGNALE UND OPTISCHE VORRICHTUNG
PROCÉDÉ DE TRAITEMENT DE SIGNAL OPTIQUE ET DISPOSITIF OPTIQUE

(43) Date of publication of application: 15.05.2019
(73) Proprietor: Huawei Technologies Co., Ltd., Longgang District Shenzhen, Guangdong 518129 (CN)
(72) Inventor: JI, Ruiqiang, Shenzhen Guangdong 518129 (CN); FU, Shengmeng, Shenzhen Guangdong 518129 (CN); LI, Yanbo, Shenzhen Guangdong 518129 (CN); SONG, Xiaolu, Shenzhen Guangdong 518129 (CN); ZENG, Li, Shenzhen Guangdong 518129 (CN)
(74) Representative: Maiwald Patent- und Rechtsanwaltsgesellschaft mbH
(86) International application number: PCT/CN2016/097523
(87) International publication number: WO 2018/039971

(56) References cited:
- CN-A- 102 566 966
- CN-A- 103 634 052
- CN-A- 105 281 862
- GB-A- 2 391 955
- JP-A- H11 271 817
- US-A1- 2008 123 188
- US-A1- 2010 296 161
- US-A1- 2010 302 637
- JINGHUI ZOU ET AL: "An SOI based polarization insensitive filter for all-optical clock recovery", OFC 2014, OSA, 9 March 2014 (2014-03-09), pages 1-3, XP032632867, DOI: 10.1109/OFC.2014.6886894 [retrieved on 2014-08-27]

## Description

### TECHNICAL FIELD

Embodiments of the present invention relate to an optical signal processing method and an optical component.

### BACKGROUND

In an optical communications system, an output of a laser is usually linearly polarized light, but an ordinary single-mode fiber (Single-Mode Fiber, SMF for short) transmitting an optical signal is polarization-independent. Therefore, a polarization state of the optical signal transmitted for a long distance is random. If an optical component in a fiber link is polarization-dependent, a polarization-dependent loss (Polarization-Dependent Loss, PDL for short) and polarization mode dispersion (Polarization Mode Dispersion, PMD for short) may be caused. Therefore, the optical component in the fiber link is usually required to be polarization-independent, that is, the optical component in the fiber link is usually required to be polarization-insensitive.
J. Zou et al, "An SOI based polarization Insensitive Filter for All-optical Clock Recovery", OFC 2014, OSA 9 March 2014, pages 1-3, describes an SOI based polarization diversity scheme consisting of two 2D grating couplers and a micro ring resonator. Based on this scheme, it is described that all-optical polarization insensitive clock recovery was demonstrated successfully.
US2008/123188A1 describes polarization-diverse optical devices and related methods. In some embodiments, these devices and methods are realized by utilizing a four-port, wavelength-dependent optical coupler that is arranged to receive identical counter-propagating optical signals.
GB2391955 A describes that an integrated polarisation dependence compensator consists of, a silicon-on-isolator (Sol) substrate, a Mach-Zehnder polarisation splitter, a 2-port optical device and a waveguide structure interconnecting the polarisation splitter and the optical device. An optical input signal is supplied by way of a circulator and an optical fibre pigtail to one input of the polarisation splitter which serves to split the signal into first and second polarisation components TM and TE which are supplied to branch waveguides and of the waveguide structure. The first polarisation component TM is transmitted by the waveguide to an integrated polarisation converter or rotator which converts the component TM to TE polarised light for supplying to a first port of the device by way of a waveguide. The second polarisation component TE is passed directly to a second port of the device. The polarisation splitter also serves as a polarisation combiner for light received back along the waveguides and. The light supplied along the waveguide to the first port of the device is returned along the waveguide to the splitter after passing through the device, and the light supplied along the waveguide to the second port of the device is passed by the waveguide to the polarisation convertor (after the light has passed though the device) which converts the light to TM polarised light, which is in turn returned to the splitter by way of the waveguide. The splitter serves to combine third and fourth polarisation components TM and TE of the returned light to produce an output signal which is supplied by the optical fibre to the circulator.
JPH11271817A describes that an optical filter is constituted as a reflection type using an optical multiplexer/demultiplexer, an optical gate, and a light reflector, where only one optical multiplexer/demultiplexer is needed. It is described that consequently, deviation in characteristics resulting from the use of plural optical multiplexer/ demultiplexers is eliminated, filter characteristics with a stable output level are obtain, and polarization dependency becomes small. It is described that the optical filter neither decreases in wavelength switching speed nor has the wavelength selection band narrowed down. A Faraday rotator mirror is used as the light reflector to cancel the influence of polarization dependency of the elements in use.
US2010/296161A1 describes that one embodiment contemplates a polarization insensitive optical circuit constructed of an input/output signal separator, such as an optical circulator or a 1×2 or 2x2 coupler or N×M coupler, a polarization sensitive operator, and a polarization rotator reflector. In an alternate embodiment, a polarization insensitive optical circuit comprising a polarization rotator reflector, and a polarization sensitive operator which may comprise for example a first polarization rotator, an operator/coupler, and a polarization beam combiner is contemplated. It is described that preferably at least one of the components in the optical circuit is constructed integrally from the substrate upon which the optical circuit is based, where for example the polarization rotator and/or polarization sensitive operator may be monolithic.

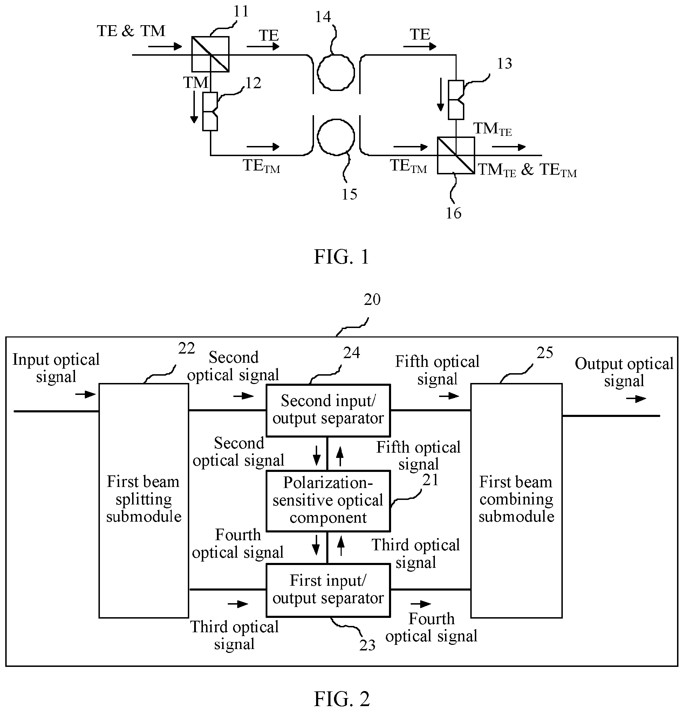

FIG. 1 is a schematic diagram of a polarization-independent optical component in the prior art. As shown in FIG. 1, the polarization-independent optical component includes: one polarization beam splitter (Polarization Beam Splitter, PBS for short) 11, two polarization rotators (Polarization Rotator, PR for short), namely, a PR 12 and a PR 13, and two polarization-sensitive optical components, namely, a polarization-sensitive optical component 14 and a polarization-sensitive optical component 15, and further includes one polarization beam combiner (Polarization Beam Combiner, PBC for short) 16. Specifically, an input optical signal is first divided by the PBS 11 into two optical signals, namely, a transverse electric (transverse electric, TE for short) optical signal and a transverse magnetic (transverse magnetic, TM for short) optical signal. The TM optical signal is converted into a TE optical signal by the PR 12, and is recorded as TE_{TM}. In this way, the input optical signal is divided in real time into two optical signals in a same polarization state. The polarization-sensitive optical component 14 and the polarization-sensitive optical component 15 respectively process the TE optical signal and the TE_{TM} optical signal. The PR 13 performs polarization rotation on the non-rotated TE optical signal, and converts the non-rotated TE optical signal into a TM_{TE} optical signal. Finally, the PBC 16 performs beam combination on the TE_{TM} optical signal and the TM_{TE} optical signal, and outputs a combined beam from an output end.

However, on one hand, the foregoing polarization-independent optical component needs to include two polarization-sensitive optical components to implement polarization independence. This increases costs of a user. On the other hand. On the other hand, during a time segment, power of the TE optical signal transmitted by the polarization-sensitive optical component 14 or power of the TE_{TM} optical signal transmitted by the polarization-sensitive optical component 15 may be 0. If a controller needs to control the polarization-independent optical component in presence of light, in this case, the controller may not be capable of controlling a status of the polarization-independent optical component. For example, the controller needs to monitor optical power of the polarization-sensitive optical component 14 and the polarization-sensitive optical component 15 in real time, but the power of the optical signal of the polarization-sensitive optical component 14 or the polarization-sensitive optical component 15 may be less than a threshold that is set in the controller. Consequently, the controller cannot control the status of the polarization-independent optical component.

### SUMMARY

Embodiments of the present invention provide an optical signal processing method and an optical component, to implement polarization independence of the optical component and reduce costs of a user. In addition, the optical component is always in presence of light. Therefore, a controller can control a status of the polarization-independent optical component.

According to a first aspect, an embodiment of the present invention provides an optical component, including: a first optical path module and a polarization-sensitive optical component , the polarization-sensitive optical component being a microring filter, where the first optical path module includes: a first beam splitting submodule, a first input/output separator, a first beam combining submodule, and a second input/output separator;
the first beam splitting submodule receives an input optical signal by using a first input end, and is configured to: divide the input optical signal into a first optical signal and a second optical signal whose polarization states are different, convert the first optical signal into a third optical signal whose polarization state is the same as that of the second optical signal, output the third optical signal to the first input/output separator, and output the second optical signal to the second input/output separator;
the first input/output separator is configured to output the third optical signal to the polarization-sensitive optical component;
the second input/output separator is configured to output the second optical signal to the polarization-sensitive optical component;
the polarization-sensitive optical component is configured to: obtain a fourth optical signal based on the second optical signal, obtain a fifth optical signal based on the third optical signal, and output the fourth optical signal and the fifth optical signal to the first input/output separator and the second input/output separator;
the first input/output separator is further configured to output the fourth optical signal to a first beam combining submodule, and the second input/output separator is further configured to output the fifth optical signal to the first beam combining submodule; and
the first beam combining submodule is configured to: convert the fourth optical signal into a sixth optical signal whose polarization state is different from that of the fifth optical signal, perform beam combination on the fifth optical signal and the sixth optical signal, and output a combined optical signal by using a first output end.

Types and quantities of optical components that the first optical signal and the second optical signal pass through are the same, that is, the optical component can implement two completely symmetric optical paths. Insertion losses of the two optical paths do not vary as an input polarization state changes, and the two optical paths have a same delay, thereby implementing polarization independence of the optical component. Further, two optical signals can be processed by using only one polarization-sensitive optical component. On one hand, costs of a user are reduced. On the other hand, the optical component is always in presence of light. Therefore, a controller can control a status of the polarization-independent optical component.

In a first optional manner, the fourth optical signal and the fifth optical signal are respectively optical signals that are in the second optical signal and the third optical signal and that satisfy a resonance condition of the polarization-sensitive optical component.

In a second optional manner, the fourth optical signal and the fifth optical signal are respectively optical signals that are in the second optical signal and the third optical signal and that do not satisfy a resonance condition of the polarization-sensitive optical component.

The optical component provided based on the first optional manner further includes: a second optical path module, where each second optical path module includes: a second beam splitting submodule, a third input/output separator, a fourth input/output separator, and a second beam combining submodule, the second beam splitting submodule has a second input end, and the second beam combining submodule has a second output end;
the polarization-sensitive optical component is further configured to: obtain a seventh optical signal based on the second optical signal, obtain an eighth optical signal based on the third optical signal, and respectively output the seventh optical signal and the eighth optical signal to the third input/output separator and the fourth input/output separator, where the seventh optical signal and the eighth optical signal are respectively optical signals that are in the second optical signal and the third optical signal and that do not satisfy the resonance condition of the polarization-sensitive optical component;
the third input/output separator is configured to output the seventh optical signal to the second beam combining submodule;
the fourth input/output separator is configured to output the eighth optical signal to the second beam combining submodule; and
the second beam combining submodule is configured to: convert the seventh optical signal into a ninth optical signal whose polarization state is different from that of the eighth optical signal, perform beam combination on the eighth optical signal and the ninth optical signal, and output a combined optical signal by using the second output end.

In conclusion, types and quantities of optical components that the seventh optical signal and the eighth optical signal in the first optical path module that do not satisfy the resonance condition of the polarization-sensitive optical component pass through are the same. That is, the optical component provided in this embodiment of the present invention can implement two completely symmetric optical paths. Insertion losses of the two optical paths do not vary as an input polarization state changes, and the two optical paths have a same delay, thereby implementing polarization independence of the optical component. Further, in this embodiment of the present invention, two optical signals can be processed by using only one polarization-sensitive optical component. On one hand, costs of a user are reduced. On the other hand, the optical component is always in presence of light. Therefore, a controller can control a status of the polarization-independent optical component.

Optionally, the second beam splitting submodule receives an input optical signal by using the second input end, and is configured to: divide the input optical signal into a tenth optical signal and an eleventh optical signal whose polarization states are different, convert the tenth optical signal into a twelfth optical signal whose polarization state is the same as that of the eleventh optical signal, output the twelfth optical signal to the third input/output separator, and output the eleventh optical signal to the fourth input/output separator;
the third input/output separator is configured to output the twelfth optical signal to the polarization-sensitive optical component;
the fourth input/output separator is configured to output the eleventh optical signal to the polarization-sensitive optical component;
the polarization-sensitive optical component is configured to: obtain a thirteenth optical signal based on the eleventh optical signal, obtain a fourteenth optical signal based on the twelfth optical signal, and output the thirteenth optical signal and the fourteenth optical signal to the third input/output separator and the fourth input/output separator;
the third input/output separator is further configured to output the thirteenth optical signal to the second beam combining submodule, and the fourth input/output separator is further configured to output the fourteenth optical signal to the second beam combining submodule, where the thirteenth optical signal and the fourteenth optical signal are respectively optical signals that are in the eleventh optical signal and the twelfth optical signal and that satisfy the resonance condition of the polarization-sensitive optical component; and
the second beam combining submodule is configured to: convert the thirteenth optical signal into a fifteenth optical signal whose polarization state is different from that of the fourteenth optical signal, perform beam combination on the fourteenth optical signal and the fifteenth optical signal, and output a combined optical signal by using the second output end.

In conclusion, types and quantities of optical components that the fourteenth optical signal and the fifteenth optical signal in the second optical path module that satisfy the resonance condition of the polarization-sensitive optical component pass through are the same. That is, the optical component provided in this embodiment of the present invention can implement two completely symmetric optical paths. Insertion losses of the two optical paths do not vary as an input polarization state changes, and the two optical paths have a same delay, thereby implementing polarization independence of the optical component. Further, in this embodiment of the present invention, two optical signals can be processed by using only one polarization-sensitive optical component. On one hand, costs of a user are reduced. On the other hand, the optical component is always in presence of light. Therefore, a controller can control a status of the polarization-independent optical component.

Optionally, the polarization-sensitive optical component is configured to: obtain a sixteenth optical signal based on the eleventh optical signal, obtain a seventeenth optical signal based on the twelfth optical signal, and output the sixteenth optical signal and the seventeenth optical signal to the first input/output separator and the second input/output separator;
the first input/output separator is further configured to output the sixteenth optical signal to the first beam combining submodule, and the second input/output separator is further configured to output the seventeenth optical signal to the first beam combining submodule, where the sixteenth optical signal and the seventeenth optical signal are respectively optical signals that are in the eleventh optical signal and the twelfth optical signal and that do not satisfy the resonance condition of the polarization-sensitive optical component; and
the first beam combining submodule is configured to: convert the sixteenth optical signal into an eighteenth optical signal whose polarization state is different from that of the seventeenth optical signal, perform beam combination on the seventeenth optical signal and the eighteenth optical signal, and output a combined optical signal by using the first output end.

In conclusion, types and quantities of optical components that the sixteenth optical signal and the seventeenth optical signal in the second optical path module that do not satisfy the resonance condition of the polarization-sensitive optical component pass through are the same. That is, the optical component provided in this embodiment of the present invention can implement two completely symmetric optical paths. Insertion losses of the two optical paths do not vary as an input polarization state changes, and the two optical paths have a same delay, thereby implementing polarization independence of the optical component. Further, in this embodiment of the present invention, two optical signals can be processed by using only one polarization-sensitive optical component. On one hand, costs of a user are reduced. On the other hand, the optical component is always in presence of light. Therefore, a controller can control a status of the polarization-independent optical component.

The optical component provided based on the second optional manner is described below. A function of the optical component is similar to that of the optical component provided based on the first optional manner. Based thereupon, a technical effect corresponding to the optical component provided in the second optional manner is not described herein again.

The optical component provided based on the second optional manner further includes: a second optical path module, where each second optical path module includes: a second beam splitting submodule, a third input/output separator, a fourth input/output separator, and a second beam combining submodule, the second beam splitting submodule has a second input end, and the second beam combining submodule has a second output end;
the polarization-sensitive optical component obtains a seventh optical signal based on the second optical signal, obtains an eighth optical signal based on the third optical signal, and respectively outputs the seventh optical signal and the eighth optical signal to the third input/output separator and the fourth input/output separator, where the seventh optical signal and the eighth optical signal are respectively optical signals that are in the second optical signal and the third optical signal and that satisfy the resonance condition of the polarization-sensitive optical component;
the third input/output separator is configured to output the seventh optical signal to the second beam combining submodule;
the fourth input/output separator is configured to output the eighth optical signal to the second beam combining submodule; and
the second beam combining submodule is configured to: convert the seventh optical signal into a ninth optical signal whose polarization state is different from that of the eighth optical signal, perform beam combination on the eighth optical signal and the ninth optical signal, and output a combined optical signal by using the second output end.

Optionally, the second beam splitting submodule receives an input optical signal by using the second input end, and is configured to: divide the input optical signal into a tenth optical signal and an eleventh optical signal whose polarization states are different, convert the tenth optical signal into a twelfth optical signal whose polarization state is the same as that of the eleventh optical signal, output the twelfth optical signal to the third input/output separator, and output the eleventh optical signal to the fourth input/output separator;
the third input/output separator is configured to output the twelfth optical signal to the polarization-sensitive optical component;
the fourth input/output separator is configured to output the eleventh optical signal to the polarization-sensitive optical component;
the polarization-sensitive optical component is configured to: obtain a thirteenth optical signal based on the eleventh optical signal, obtain a fourteenth optical signal based on the twelfth optical signal, and output the thirteenth optical signal and the fourteenth optical signal to the third input/output separator and the fourth input/output separator;
the third input/output separator is further configured to output the thirteenth optical signal to the fourth input/output separator, and the fourth input/output separator is further configured to output the fourteenth optical signal to the third input/output separator, where the thirteenth optical signal and the fourteenth optical signal are respectively optical signals that are in the eleventh optical signal and the twelfth optical signal and that do not satisfy the resonance condition of the polarization-sensitive optical component; and
the second beam combining submodule is configured to: convert the thirteenth optical signal into a fifteenth optical signal whose polarization state is different from that of the fourteenth optical signal, perform beam combination on the fourteenth optical signal and the fifteenth optical signal, and output a combined optical signal by using the second output end.

An optical signal processing method provided in an embodiment of the present invention is described below. The method corresponds to the foregoing optical component, and a technical effect in corresponding content is the same. Details are not described herein again.

According to a second aspect, an embodiment of the present invention provides an optical signal processing method according to claim 9. Further optional aspects of the method are defined by the dependent method claims.

The embodiments of the present invention provide the optical signal processing method and the optical component. The optical component includes: the first optical path module and the polarization-sensitive optical component. The first optical path module includes: the first beam splitting submodule, the first input/output separator, the first beam combining submodule, and the second input/output separator. The first beam splitting submodule receives the input optical signal by using the first input end, and is configured to: divide the input optical signal into the first optical signal and the second optical signal whose polarization states are different, convert the first optical signal into the third optical signal whose polarization state is the same as that of the second optical signal, output the third optical signal to the first input/output separator, and output the second optical signal to the second input/output separator. The first input/output separator is configured to output the third signal to the polarization-sensitive optical component. The second input/output separator is configured to output the second optical signal to the polarization-sensitive optical component. The polarization-sensitive optical component is configured to: perform equivalent processing on the second optical signal and the third optical signal, to respectively obtain the fourth optical signal and the fifth optical signal, and output the fourth optical signal and the fifth optical signal to the first input/output separator and the second input/output separator. The first input/output separator is further configured to output the fourth optical signal to the first beam combining module, and the second input/output separator is further configured to output the fifth optical signal to the first beam combining module. The first beam combining submodule is configured to: convert the fourth optical signal into the sixth optical signal whose polarization state is different from that of the fifth optical signal, perform beam combination on the fifth optical signal and the sixth optical signal, and output the combined optical signal by using the first output end. In this way, polarization independence of the optical component is implemented. Further, two optical signals can be processed by using only one polarization-sensitive optical component. On one hand, costs of a user are reduced. On the other hand, the optical component is always in presence of light. Therefore, a controller can control a status of the polarization-independent optical component.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic diagram of a polarization-independent optical component in the prior art;
FIG. 2 is a schematic diagram of an optical component according to an embodiment of the present invention;
FIG. 2A is a schematic diagram of transmission of an optical signal in an optical component according to an embodiment of the present invention;
FIG. 2B is a schematic diagram of transmission of an optical signal in an optical component according to another embodiment of the present invention;
FIG. 3 is a schematic diagram of an optical component according to another embodiment of the present invention;
FIG. 4A is a schematic diagram of a microring filter forming part of an embodiment of the present invention;
FIG. 4B is a schematic diagram of a microring filter forming part of another embodiment of the present invention;
FIG. 5 is a schematic diagram of a circulator forming part of an embodiment of the present invention;
FIG. 6A is a schematic diagram of an optical component and transmission of an optical signal according to an embodiment of the present invention;
FIG. 6B is a schematic diagram of an optical component and transmission of an optical signal according to another embodiment of the present invention;
FIG. 6C is a schematic diagram of an optical component and transmission of an optical signal according to still another embodiment of the present invention;
FIG. 7 is a schematic diagram of an optical component according to still another embodiment of the present invention;
FIG. 8A is a schematic diagram of an optical component and transmission of an optical signal according to an embodiment of the present invention;
FIG. 8B is a schematic diagram of an optical component and transmission of an optical signal according to another embodiment of the present invention;
FIG. 8C is a schematic diagram of an optical component and transmission of an optical signal according to still another embodiment of the present invention;
FIG. 9 is a schematic diagram of an optical component according to yet another embodiment of the present invention;
FIG. 10 is a flowchart of an optical signal processing method according to an embodiment of the present invention;
FIG. 11 is a flowchart of an optical signal processing method according to another embodiment of the present invention;
FIG. 12 is a flowchart of an optical signal processing method according to still another embodiment of the present invention;
FIG. 13 is a flowchart of an optical signal processing method according to yet another embodiment of the present invention;
FIG. 14 is a flowchart of an optical signal processing method according to still yet another embodiment of the present invention;
FIG. 15 is a flowchart of a further optical signal processing method; and
FIG. 16 is a flowchart of a still further optical signal processing method.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention.

To resolve a problem in the prior art that costs of a user are increased because a polarization-independent optical component needs to include two polarization-sensitive optical components to implement polarization independence and a problem that a controller may not be capable of controlling a status of the polarization-independent optical component, the embodiments of the present invention provide an optical signal processing method and an optical component.

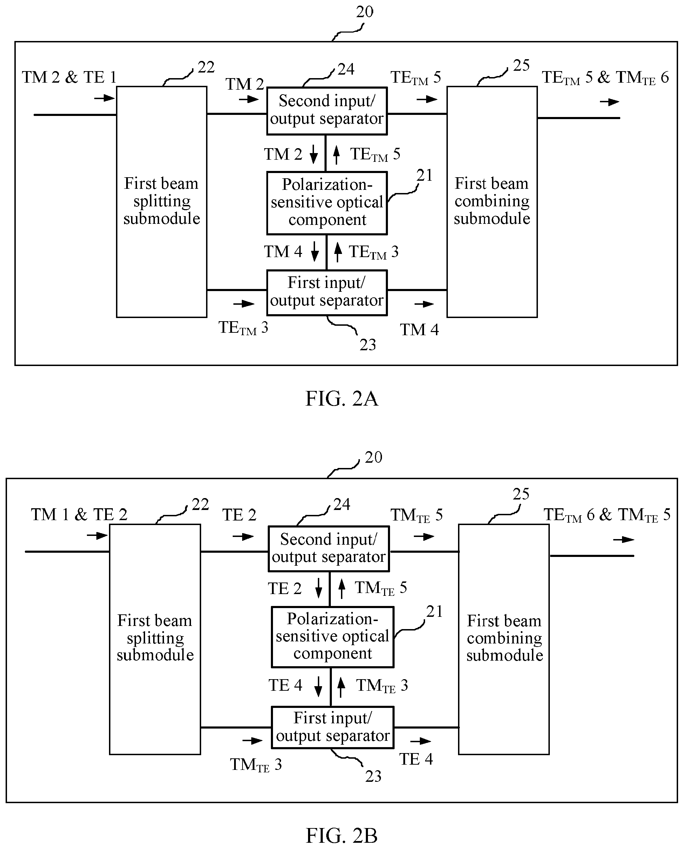

FIG. 2 is a schematic diagram of an optical component according to an embodiment of the present invention. As shown in FIG. 2, the optical component 20 includes: a first optical path module and a polarization-sensitive optical component 21. The first optical path module includes: a first beam splitting submodule 22, a first input/output separator 23, a second input/output separator 24, and a first beam combining submodule 25. The first beam splitting submodule 22 has a first input end. The first beam combining submodule 25 has a first output end.

Specifically, the first beam splitting submodule 22 receives an input optical signal by using the first input end, and is configured to: divide the input optical signal into a first optical signal and a second optical signal whose polarization states are different, convert the first optical signal into a third optical signal whose polarization state is the same as that of the second optical signal, output the third optical signal to the first input/output separator 23, and output the second optical signal to the second input/output separator 24. The first input/output separator 23 is configured to output the third signal to the polarization-sensitive optical component 21. The second input/output separator 24 is configured to output the second optical signal to the polarization-sensitive optical component 21. The polarization-sensitive optical component 21 is configured to: obtain a fourth optical signal based on the second optical signal, and obtain a fifth optical signal based on the third optical signal.

The polarization-sensitive optical component 21 respectively outputs the fourth optical signal and the fifth optical signal to the first input/output separator 23 and the second input/output separator 24. The first input/output separator 23 is further configured to output the fourth optical signal to the first beam combining module 25. The second input/output separator 24 is further configured to output the fifth optical signal to the first beam combining module 25. The first beam combining submodule 25 is configured to: convert the fourth optical signal into a sixth optical signal whose polarization state is different from that of the fifth optical signal, perform beam combination on the fifth optical signal and the sixth optical signal, and output a combined optical signal by using the first output end.

For ease of understanding, an i^{th} optical signal is represented by a polarization state i in this specification. For example, when the first optical signal is a TE optical signal, the first optical signal is expressed as TE 1.

FIG. 2A is a schematic diagram of transmission of an optical signal in an optical component according to an embodiment of the present invention. As shown in FIG. 2A, input optical signals are TE 1 & TM 2. The foregoing first optical signal may be the TE 1 optical signal, and the second optical signal may be the TM 2 optical signal. Correspondingly, the third optical signal is a TE_{TM} 3 optical signal, a polarization state of the fourth optical signal is TM 4, a polarization state of the fifth optical signal is still TE_{TM} 5, a polarization state of the sixth optical signal is TM_{TE} 6, and a polarization state of the output optical signal is TE_{TM} 5 & TM_{TE} 6.

FIG. 2B is a schematic diagram of transmission of an optical signal in an optical component according to another embodiment of the present invention. As shown in FIG. 2B, the foregoing first optical signal may be a TM 1 optical signal, and the second optical signal may be a TE 2 optical signal. Correspondingly, the third optical signal is a TM_{TE} 3 optical signal, a polarization state of the fourth optical signal is still TE 4, a polarization state of the fifth optical signal is still TM_{TE} 5, and the sixth optical signal is TE_{TM} 6.

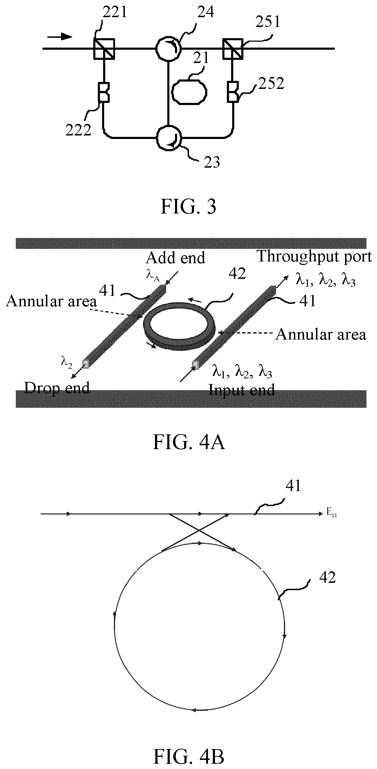

Based on an optical component shown in FIG. 1, further, FIG. 3 is a schematic diagram of an optical component according to another embodiment of the present invention. As shown in FIG. 3, a first beam splitting submodule includes a polarization beam splitter PBS 221 and a polarization rotator PR 222. The PBS 221 is configured to: divide an input optical signal into a first optical signal and a second optical signal whose polarization states are different, output the first optical signal to the PR, and output the second optical signal to a second input/output separator 24. The PR 222 is configured to: convert the first optical signal into a third optical signal whose polarization state is the same as that of the second optical signal, and output the third optical signal to a first input/output separator 23.

Correspondingly, a first beam combining submodule includes a polarization beam combiner (Polarization Beam Combiner, PBC for short) 251 and a PR 252, and is configured to: convert a fourth optical signal into a sixth optical signal whose polarization state is different from that of a fifth optical signal, perform beam combination on the fifth optical signal and the sixth optical signal, and output a combined optical signal by using a first output end.

In this embodiment of the present invention, types and quantities of optical components that the first optical signal and the second optical signal pass through are the same. That is, the optical component provided in this embodiment of the present invention can implement two completely symmetric optical paths. Insertion losses of the two optical paths do not vary as an input polarization state changes, and the two optical paths have a same delay, thereby implementing polarization independence of the optical component. Further, in this embodiment of the present invention, two optical signals can be processed by using only one polarization-sensitive optical component. On one hand, costs of a user are reduced. On the other hand, the polarization-independent optical component is always in presence of light. Therefore, a controller can control a status of the polarization-independent optical component.

The foregoing polarization-sensitive optical component is a microring filter. FIG. 4A is a schematic diagram of a microring filter forming part of an embodiment of the present invention. As shown in FIG. 4A, the microring filter includes two parallel straight waveguides 41 and an annular waveguide 42 that is coupled to the straight waveguides 41. The two straight waveguides are also referred to as boot waveguides or port waveguides, and may be coupled to a microloop by using a directional coupler (according to an evanescent wave principle) or a multimode interference (Multimode Interference, MMI for short) coupler. Three optical signals whose wavelengths are respectively λ₁, λ₂, and λ₃ are input from an input end. An optical signal whose wavelength is λ_{A} is input from an add end. λ₂ and λ_{A} satisfy a resonance condition of the microloop, that is, 2*π * R * Neff = m λ, where m is an integer, R is a radius of the annular waveguide, and Neff is an effective refractive index of the annular waveguide. Optical signals satisfying the resonance condition interfere constructively in the microloop. When input from a port of a waveguide, the light is to be output from a corresponding port of the other waveguide. As shown in FIG. 4A, the optical signal that is input from the input port and whose wavelength is λ₂ is output from a drop end of the other waveguide. The optical signal that is input from the add end and whose wavelength is λ_{A} is output from a throughput port. Similarly, optical signals not satisfying the resonance condition interfere destructively in the annular waveguide, and are to be output from the other port of a same waveguide. As shown in FIG. 4A, λ₁ and λ₃ do not satisfy the resonance condition, are input from the input end, and therefore, and are directly output from the throughput end of the same waveguide.

FIG. 4B is a schematic diagram of another microring filter forming part of another embodiment of the present invention. As shown in FIG. 4B, compared with FIG. 4A, after one straight waveguide is removed in FIG. 4B, the filter includes only one annular waveguide 42 and one straight waveguide 41, and is referred to as a notch filter (notch filter) due to its unique filtering feature. As shown in FIG. 4B, polarization of an optical signal satisfying a resonance condition is also enhanced in the annular waveguide. No optical signal is output from an output end (for example, a port corresponding to Eₜ₁ in the figure). An optical signal not satisfying the resonance condition is to be output from the output port (the port corresponding to Eti).

Optionally, the foregoing first input/output separator and second input/output separator, and a third input/output separator and a fourth input/output separator that are described below may be circulators or couplers, and for example, may be M×N couplers. For example, a three-port circulator may be replaced with a 1×2 or 2×2 coupler, and may be based on a directional coupler or an MMI coupler.

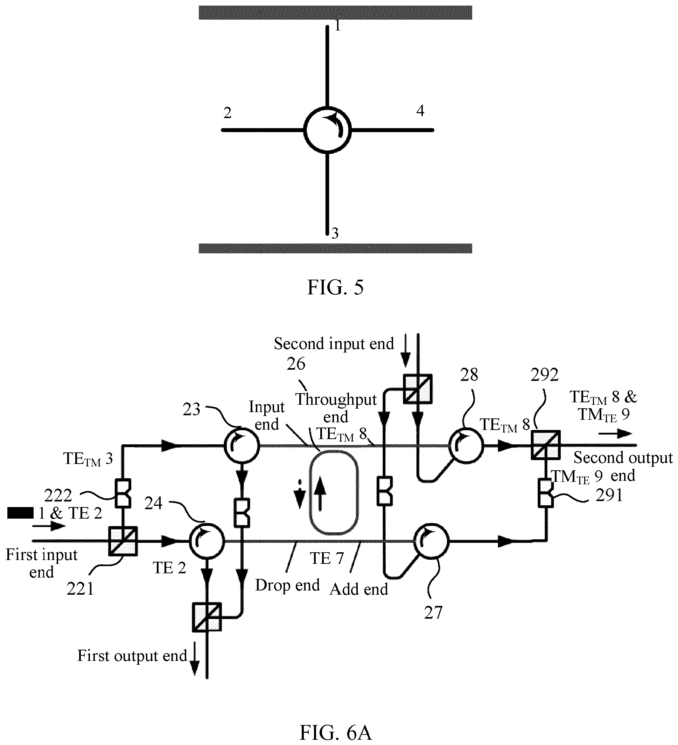

A circulator is a non-reciprocal component having several ports, and usually has three or four ports. FIG. 5 is a schematic diagram of a circulator according to an embodiment of the present invention. As shown in FIG. 5, a function of the circulator is outputting, from a next port in a directional sequence (clockwise or counterclockwise), an optical signal that is input from any port of the circulator. The direction of the four-port circulator shown in FIG. 5 is counterclockwise (as indicated by an arrow in the circle). That is, light that is input from a port 1 is to be output from a port 2. Light that is input from the port 2 is to be output from a port 3. Light that is input from the port 3 is to be output from a port 4. Light that is input from the port 4 is to be output from the port 1.

Given that the polarization-sensitive optical component is a microring filter, the fourth optical signal and the fifth optical signal may be optical signals in the following two cases.

In a first case, the fourth optical signal and the fifth optical signal are respectively optical signals that are in the second optical signal and the third optical signal and that satisfy a resonance condition of the polarization-sensitive optical component.

In a second case, the fourth optical signal and the fifth optical signal are respectively optical signals that are in the second optical signal and the third optical signal and that do not satisfy a resonance condition of the polarization-sensitive optical component.

For the first case, further, the optical component further includes: a second optical path module. Each second optical path module includes: a second beam splitting submodule, a third input/output separator, a fourth input/output separator, and a second beam combining submodule. The second beam splitting submodule has a second input end, and the second beam combining submodule has a second output end.

First, for an optical signal that is in the first optical path module and that does not satisfy the resonance condition of the polarization-sensitive optical component, the optical component performs the following processing:
The polarization-sensitive optical component is further configured to: obtain a seventh optical signal based on the second optical signal, obtain an eighth optical signal based on the third optical signal, and respectively output the seventh optical signal and the eighth optical signal to the third input/output separator and the fourth input/output separator. The seventh optical signal and the eighth optical signal are respectively optical signals that are in the second optical signal and the third optical signal and that do not satisfy the resonance condition of the polarization-sensitive optical component. The third input/output separator is configured to output the seventh optical signal to the second beam combining submodule. The fourth input/output separator is configured to output the eighth optical signal to the second beam combining submodule. The second beam combining submodule is configured to: convert the seventh optical signal into a ninth optical signal whose polarization state is different from that of the eighth optical signal, perform beam combination on the eighth optical signal and the ninth optical signal, and output a combined optical signal by using the second output end.

The second beam combining submodule includes a polarization beam combiner PBC and a PR. The PR is configured to convert the seventh optical signal into the ninth optical signal whose polarization state is different from that of the eighth optical signal. The PBC is configured to: perform beam combination on the eighth optical signal and the ninth optical signal, and output the combined optical signal by using the second output end.

When the second optical signal is a TM optical signal and the third optical signal is a TE_{TM} optical signal, a polarization state of the seventh optical signal is still TM, a polarization state of the eighth optical signal is still TE_{TM}, and a polarization state of the ninth optical signal is TM_{TE}. When the second optical signal is a TE optical signal and the third optical signal is a TM_{TE} optical signal, a polarization state of the seventh optical signal is still TE, a polarization state of the eighth optical signal is still TM_{TE}, and a polarization state of the ninth optical signal is TE_{TM}.

As stated above, the polarization-sensitive optical component is a microring filter; it is assumed that the first input/output separator, the second input/output separator, the third input/output separator, and the fourth input/output separator are all circulators. The first beam splitting submodule and the second beam splitting submodule each include a PBS and a PR; and the first beam combining submodule and the second beam combining submodule each include a PBC and a PR. The foregoing process is described in detail below: FIG. 6A is a schematic diagram of an optical component and transmission of an optical signal according to an embodiment of the present invention. As shown in FIG. 6A, a PBS 221 in the first optical path module is configured to: divide an input optical signal into a first optical signal (TM 1) and a second optical signal (TE 2) whose polarization states are different, output the first optical signal (TM 1) to a PR 222, and output the second optical signal (TE 2) to the second input/output separator 24. The PR 222 is configured to: convert the first optical signal (TM 1) into a third optical signal (TE_{TM} 3) whose polarization state is the same as that (TE 2) of the second optical signal, and output the third optical signal (TE _{TM} 3) to the first input/output separator 23. The first input/output separator 23 inputs the third optical signal (TE_{TM} 3) to a microring filter 26 by using an input end of the microring filter 26. The second input/output separator 24 inputs the second optical signal (TE 2) to the microring filter 26 by using a drop end of the microring filter 26. The microring filter 26 processes the second optical signal (TE 2) and the third optical signal (TE_{TM} 3), to respectively obtain a seventh optical signal (TE 7) and an eighth optical signal (TE_{TM} 8), and respectively outputs the seventh optical signal (TE 7) to the third input/output separator 27 by using the drop end and outputs the eighth optical signal (TE_{TM} 8) to the fourth input/output separator 28 by using a throughput end. The seventh optical signal (TE 7) and the eighth optical signal (TE_{TM} 8) are respectively optical signals that are in the second optical signal (TE 2) and the third optical signal (TE_{TM} 3) and that do not satisfy the resonance condition of the polarization-sensitive optical component. The third input/output separator 27 is configured to output the seventh optical signal (TE 7) to a PR 291, and the fourth input/output separator 28 is configured to output the eighth optical signal (TE_{TM} 8) to a PBC 292. The PR 291 converts the seventh optical signal (TE 7) into a ninth optical signal (TM_{TE} 9) whose polarization state is different from that of the eighth optical signal (TE_{TM} 8), and outputs the ninth optical signal (TM_{TE} 9) to the PBC 292. Finally, the PBC 292 performs beam combination on the eighth optical signal (TE_{TM} 8) and the ninth optical signal (TM_{TE} 9), and outputs a combined optical signal by using the second output end.

It should be noted that TE, TM, TM_{TE}, or TE_{TM} in the foregoing brackets merely represents a polarization state. When the first optical signal is a TE optical signal and the second optical signal is a TM optical signal, a processing process of the optical component is similar to that in the foregoing example. Details are not described herein again.

In conclusion, types and quantities of optical components that the seventh optical signal and the eighth optical signal in the first optical path module that do not satisfy the resonance condition of the polarization-sensitive optical component pass through are the same. That is, the optical component provided in this embodiment of the present invention can implement two completely symmetric optical paths. Insertion losses of the two optical paths do not vary as an input polarization state changes, and the two optical paths have a same delay, thereby implementing polarization independence of the optical component. Further, in this embodiment of the present invention, two optical signals can be processed by using only one polarization-sensitive optical component. On one hand, costs of a user are reduced. On the other hand, the optical component is always in presence of light. Therefore, a controller can control a status of the polarization-independent optical component.

Second, for an optical signal that is in the second optical path module and that satisfies the resonance condition of the polarization-sensitive optical component, the optical component performs the following processing:
The second beam splitting submodule receives an input optical signal by using the second input end, and is configured to: divide the input optical signal into a tenth optical signal and an eleventh optical signal whose polarization states are different, convert the tenth optical signal into a twelfth optical signal whose polarization state is the same as that of the eleventh optical signal, output the twelfth optical signal to the third input/output separator, and output the eleventh optical signal to the fourth input/output separator. The third input/output separator is configured to output the twelfth optical signal to the polarization-sensitive optical component. The fourth input/output separator is configured to output the eleventh optical signal to the polarization-sensitive optical component. The polarization-sensitive optical component obtains a thirteenth optical signal based on the eleventh optical signal, obtains a fourteenth optical signal based on the twelfth optical signal, and outputs the thirteenth optical signal and the fourteenth optical signal to the third input/output separator and the fourth input/output separator. The third input/output separator is further configured to output the thirteenth optical signal to the second beam combining submodule, and the fourth input/output separator is further configured to output the fourteenth optical signal to the second beam combining submodule. The thirteenth optical signal and the fourteenth optical signal are respectively optical signals that are in the eleventh optical signal and the twelfth optical signal and that satisfy the resonance condition of the polarization-sensitive optical component. The second beam combining submodule is configured to: convert the thirteenth optical signal into a fifteenth optical signal whose polarization state is different from that of the fourteenth optical signal, perform beam combination on the fourteenth optical signal and the fifteenth optical signal, and output a combined optical signal by using the second output end.

The second beam splitting submodule includes a PBS and a PR. The polarization beam splitter PBS is configured to: divide the optical signal that is input by using the second input end into the tenth optical signal and the eleventh optical signal whose polarization states are different, output the eleventh optical signal to the fourth input/output separator, and output the tenth optical signal to the PR. The PR converts the tenth optical signal into the twelfth optical signal whose polarization state is the same as that of the eleventh optical signal, and outputs the twelfth optical signal to the third input/output separator. The PR is further configured to: convert the thirteenth optical signal into the fifteenth optical signal whose polarization state is different from that of the fourteenth optical signal. The PBS is further configured to: perform beam combination on the fourteenth optical signal and the fifteenth optical signal, and output the combined optical signal by using the second output end.

When the tenth optical signal is a TM optical signal and the eleventh optical signal is a TE optical signal, a polarization state of the twelfth optical signal is still TE_{TM}, a polarization state of the thirteenth optical signal is still TE, a polarization state of the fourteenth optical signal is still TE_{TM}, and a polarization state of the fifteenth optical signal is still TM_{TE}. When the tenth optical signal is a TE optical signal and the eleventh optical signal is a TM optical signal, a polarization state of the twelfth optical signal is still TM_{TE}, a polarization state of the thirteenth optical signal is still TM, a polarization state of the fourteenth optical signal is still TM_{TE}, and a polarization state of the fifteenth optical signal is still TE_{TM}.

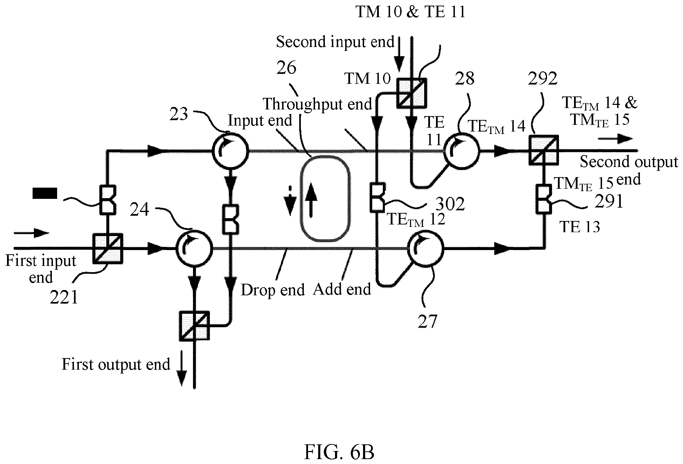

As stated above, the polarization-sensitive optical component is a microring filter; it is assumed that the first input/output separator, the second input/output separator, the third input/output separator, and the fourth input/output separator are all circulators. The first beam splitting submodule and the second beam splitting submodule each include a PBS and a PR; and the first beam combining submodule and the second beam combining submodule each include a PBC and a PR. The foregoing process is described in detail below: FIG. 6B is a schematic diagram of an optical component and transmission of an optical signal according to another embodiment of the present invention. As shown in FIG. 6B, a PBS 301 in the second beam splitting submodule outputs a tenth optical signal (TM 10) to a PR 302 and outputs an eleventh optical signal (TE 11) to the fourth input/output separator 28. The PR 302 converts the tenth optical signal (TM 10) into a twelfth optical signal (TE_{TM} 12) whose polarization state is the same as that of the eleventh optical signal (TE 11), and outputs the twelfth optical signal (TE_{TM} 12) to the third input/output separator 27. The third input/output separator 27 inputs the twelfth optical signal (TE_{TM} 12) to a microring filter 26 by using an add end of the microring filter 26. The fourth input/output separator 28 outputs the eleventh optical signal (TE 11) to the microring filter 26 by using a throughput end of the microring filter 26. The microring filter 26 is configured to: perform resonance processing on the eleventh optical signal (TE 11) and the twelfth optical signal (TE_{TM} 12) to respectively obtain a thirteenth optical signal (TE 13) and a fourteenth optical signal (TE_{TM} 14), output the thirteenth optical signal (TE 13) to the third input/output separator 27 by using the add end of the microring filter 26, and output the fourteenth optical signal (TE_{TM} 14) to the fourth input/output separator 28 by using the throughput end of the microring filter 26. The third input/output separator 27 is further configured to output the thirteenth optical signal (TE 13) to a PBC 292. The fourth input/output separator is further configured to output the fourteenth optical signal (TE_{TM} 14) to a PR 291. The PR 291 is configured to: convert the thirteenth optical signal (TE 13) into a fifteenth optical signal (TM_{TE} 15) whose polarization state is different from that of the fourteenth optical signal (TE_{TM} 14), perform beam combination on the fourteenth optical signal (TE_{TM} 14) and the fifteenth optical signal (TM_{TE} 15), and output a combined optical signal by using the second output end.

It should be noted that TE, TM, TM_{TE}, or TE_{TM} in the foregoing brackets merely represents a polarization state. When the tenth optical signal is a TE optical signal and the eleventh optical signal is a TM optical signal, a processing process of the optical component is similar to that in the foregoing example. Details are not described herein again.

In conclusion, types and quantities of optical components that the fourteenth optical signal and the fifteenth optical signal in the second optical path module that satisfy the resonance condition of the polarization-sensitive optical component pass through are the same. That is, the optical component provided in this embodiment of the present invention can implement two completely symmetric optical paths. Insertion losses of the two optical paths do not vary as an input polarization state changes, and the two optical paths have a same delay, thereby implementing polarization independence of the optical component. Further, in this embodiment of the present invention, two optical signals can be processed by using only one polarization-sensitive optical component. On one hand, costs of a user are reduced. On the other hand, the optical component is always in presence of light. Therefore, a controller can control a status of the polarization-independent optical component.

Third, for an optical signal that is in the second optical path module and that does not satisfy the resonance condition of the polarization-sensitive optical component, the optical component performs the following processing:
The polarization-sensitive optical component obtains a sixteenth optical signal based on the eleventh optical signal, obtains a seventeenth optical signal based on the twelfth optical signal, and outputs the sixteenth optical signal and the seventeenth optical signal to the first input/output separator and the second input/output separator. The first input/output separator is further configured to output the sixteenth optical signal to the first beam combining submodule, and the second input/output separator is further configured to output the seventeenth optical signal to the first beam combining submodule. The sixteenth optical signal and the seventeenth optical signal are respectively optical signals that are in the eleventh optical signal and the twelfth optical signal and that do not satisfy the resonance condition of the polarization-sensitive optical component. The first beam combining submodule is configured to: convert the sixteenth optical signal into an eighteenth optical signal whose polarization state is different from that of the seventeenth optical signal, perform beam combination on the seventeenth optical signal and the eighteenth optical signal, and output a combined optical signal by using the first output end.

Optionally, a PR in the first beam combining submodule is further configured to convert the sixteenth optical signal into the eighteenth optical signal whose polarization state is different from that of the seventeenth optical signal. A PBC in the first beam combining submodule is further configured to: perform beam combination on the seventeenth optical signal and the eighteenth optical signal, and output the combined optical signal by using the first output end.

When the eleventh optical signal is a TE optical signal and a polarization state of the twelfth optical signal is TE_{TM}, a polarization state of the sixteenth optical signal is still TE, a polarization state of the seventeenth optical signal is still TE_{TM}, and a polarization state of the eighteenth optical signal is still TM_{TE}. Alternatively, when the eleventh optical signal is a TM optical signal and a polarization state of the twelfth optical signal is TM_{TE}, a polarization state of the sixteenth optical signal is still TM, a polarization state of the seventeenth optical signal is still TM_{TE}, and a polarization state of the eighteenth optical signal is still TE_{TM}.

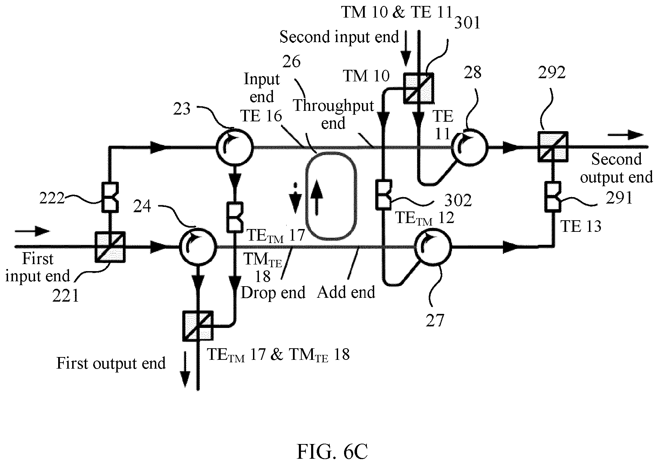

As stated above, the polarization-sensitive optical component is a microring filter; it is assumed that the first input/output separator, the second input/output separator, the third input/output separator, and the fourth input/output separator are all circulators. The first beam splitting submodule and the second beam splitting submodule each include a PBS and a PR; and the first beam combining submodule and the second beam combining submodule each include a PBC and a PR. The foregoing process is described in detail below: FIG. 6C is a schematic diagram of an optical component and transmission of an optical signal according to still another embodiment of the present invention. As shown in FIG. 6C, a PBS 301 in the second beam splitting submodule outputs a tenth optical signal (TM 10) to a PR 302, and outputs an eleventh optical signal (TE 11) to the fourth input/output separator 28. The PR 302 converts the tenth optical signal (TM 10) into a twelfth optical signal (TE_{TM} 12) whose polarization state is the same as that of the eleventh optical signal (TE 11), and outputs the twelfth optical signal (TE_{TM} 12) to the third input/output separator 27. The third input/output separator 27 inputs the twelfth optical signal (TE_{TM} 12) to a microring filter 26 by using an add end of the microring filter 26. The fourth input/output separator 28 outputs the eleventh optical signal (TE 11) to the microring filter 26 by using a throughput end of the microring filter 26. The microring filter 26 is configured to perform resonance processing on the eleventh optical signal (TE 11) and the twelfth optical signal (TE_{TM} 12) to respectively obtain a sixteenth optical signal (TE 16) and a seventeenth optical signal (TE_{TM} 17). The fourth input/output separator 28 outputs the sixteenth optical signal (TE 16) to the first input/output separator 23 by using an input end of the microring filter 26. The third input/output separator 27 outputs the seventeenth optical signal (TE_{TM} 17) to the second input/output separator 24 by using a drop end of the microring filter 26. The first input/output separator 23 is further configured to output the sixteenth optical signal (TE 16) to a PR 252. The second input/output separator 24 is further configured to output the seventeenth optical signal (TE_{TM} 17) to a PBC 251. The PR 252 is configured to convert the sixteenth optical signal (TE 16) into an eighteenth optical signal (TM_{TE} 18) whose polarization state is different from that of the seventeenth optical signal (TE_{TM} 17). The PBC 251 performs beam combination on the seventeenth optical signal (TE_{TM} 17) and the eighteenth optical signal (TM_{TE} 18), and outputs a combined optical signal by using the first output end.

It should be noted that TE, TM, TM_{TE}, or TE_{TM} in the foregoing brackets merely represents a polarization state. When the tenth optical signal is a TE optical signal and the eleventh optical signal is a TM optical signal, a processing process of the optical component is similar to that in the foregoing example. Details are not described herein again.

In conclusion, types and quantities of optical components that the sixteenth optical signal and the seventeenth optical signal in the second optical path module that do not satisfy the resonance condition of the polarization-sensitive optical component pass through are the same. That is, the optical component provided in this embodiment of the present invention can implement two completely symmetric optical paths. Insertion losses of the two optical paths do not vary as an input polarization state changes, and the two optical paths have a same delay, thereby implementing polarization independence of the optical component. Further, in this embodiment of the present invention, two optical signals can be processed by using only one polarization-sensitive optical component. On one hand, costs of a user are reduced. On the other hand, the optical component is always in presence of light. Therefore, a controller can control a status of the polarization-independent optical component.

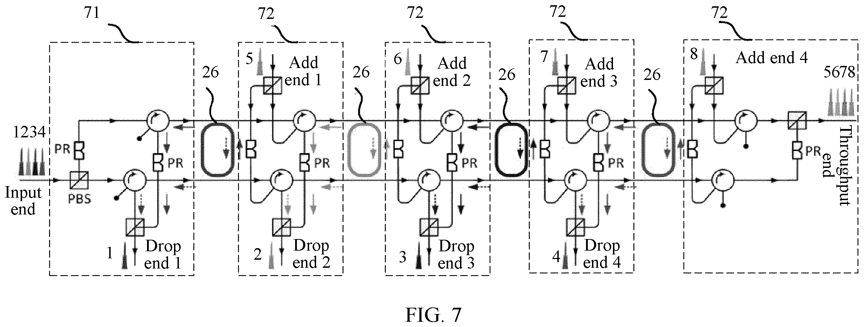

Further, the foregoing optical component may be extended into an optical component including a plurality of second optical path modules. FIG. 7 is a schematic diagram of an optical component according to still another embodiment of the present invention. As shown in FIG. 7, the optical component includes one first optical path module 71 and a plurality of second optical path modules 72. Each second optical path module 72 corresponds to one microring filter 26. Optical signals in the first optical path module 71 and the second optical path modules 72 may be transmitted in the foregoing manner, and details are not described herein again.

It should be noted that, in FIG. 7, an input end of the first optical path module 71 is the foregoing first input end, and a drop end 1 is the foregoing first output end. An add end 1, an add end 2, an add end 3, and an add end 4 of the second optical path modules 72 are the foregoing second input end; and a drop end 2, a drop end 3, a drop end 4, and a throughput end are the foregoing second output end. Numerals 1 to 8 shown in FIG. 7 respectively represent optical signals having different wavelengths. For example, optical signals 1 to 4 may be used as an input signal of the foregoing input end. Obviously, the input signal includes a plurality of optical signals having different wavelengths. For the 1^{st} microring filter 26 in a left-to-right sequence, the optical signal 1 satisfies a resonance condition of the microring filter 26, and therefore, is output from the drop end 1. The optical signals 2 to 4 do not satisfy the resonance condition of the microring filter 26, and therefore, are input to the 1^{st} second optical path module 72. By analogy, when satisfying a resonance condition of the 2^{nd} microring filter 26, the optical signal 2 is output from the drop end 2. Correspondingly, using the 2^{nd} second optical path module 72 as an example, an optical signal 6 is input from the add end 2. As can be learned from FIG. 7, the optical signal 6 does not satisfy a resonance condition of the 3^{rd} microring filter 26, and therefore, is output to the 3^{rd} second optical path module 72. Similarly, the optical signal 6 does not satisfy a resonance condition of the 4^{th} microring filter 26, and therefore, is output to the 4^{th} second optical path module 72, until the optical signal 6 is output from the throughput end.

For the second case, further, the optical component further includes: a second optical path module. Each second optical path module includes: a second beam splitting submodule, a third input/output separator, a fourth input/output separator, and a second beam combining submodule. The second beam splitting submodule has a second input end, and the second beam combining submodule has a second output end.

First, for an optical signal that is in the first optical path module and that satisfies the resonance condition of the polarization-sensitive optical component, the optical component performs the following processing:
The polarization-sensitive optical component is further configured to: obtain a seventh optical signal based on the second optical signal, obtain an eighth optical signal based on the third optical signal, and respectively output the seventh optical signal and the eighth optical signal to the third input/output separator and the fourth input/output separator. The seventh optical signal and the eighth optical signal are respectively optical signals that are in the second optical signal and the third optical signal and that satisfy the resonance condition of the polarization-sensitive optical component. The third input/output separator is configured to output the seventh optical signal to the second beam combining submodule. The fourth input/output separator is configured to output the eighth optical signal to the second beam combining submodule. The second beam combining submodule is configured to: convert the seventh optical signal into a ninth optical signal whose polarization state is different from that of the eighth optical signal, perform beam combination on the eighth optical signal and the ninth optical signal, and output a combined optical signal by using the second output end.

The second beam combining submodule includes a polarization beam combiner PBC and a PR. The PR is configured to convert the seventh optical signal into the ninth optical signal whose polarization state is different from that of the eighth optical signal. The PBC is configured to: perform beam combination on the eighth optical signal and the ninth optical signal, and output the combined optical signal by using the second output end.

When the second optical signal is a TM optical signal and the third optical signal is a TE_{TM} optical signal, a polarization state of the seventh optical signal is still TM, a polarization state of the eighth optical signal is still TE_{TM}, and a polarization state of the ninth optical signal is TM_{TE}. When the second optical signal is a TE optical signal and the third optical signal is a TM_{TE} optical signal, a polarization state of the seventh optical signal is still TE, a polarization state of the eighth optical signal is still TM_{TE}, and a polarization state of the ninth optical signal is TE_{TM}.

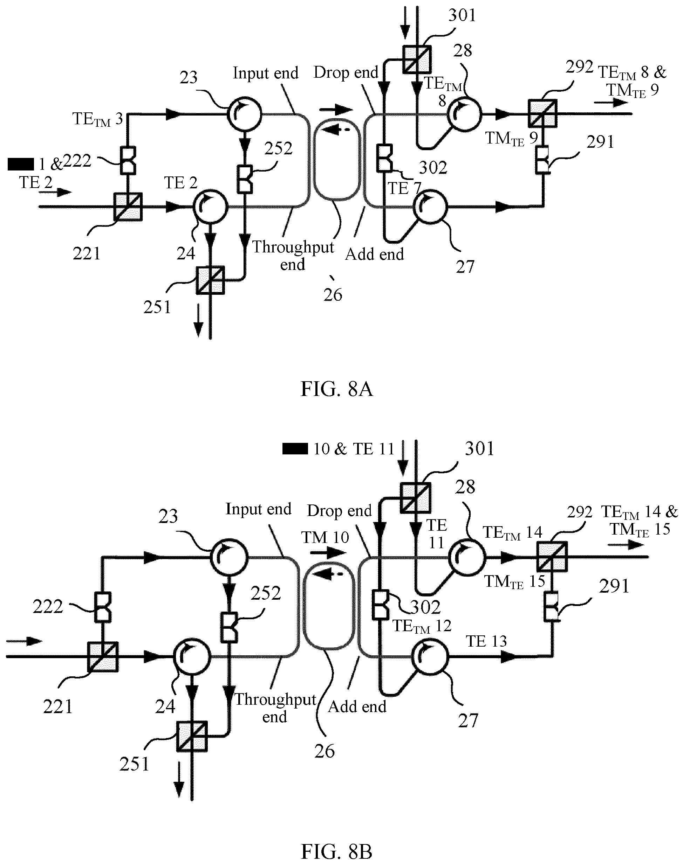

As stated above, the polarization-sensitive optical component is a microring filter; it is assumed that the first input/output separator, the second input/output separator, the third input/output separator, and the fourth input/output separator are all circulators. The first beam splitting submodule and the second beam splitting submodule each include a PBS and a PR; and the first beam combining submodule and the second beam combining submodule each include a PBC and a PR. The foregoing process is described in detail below: FIG. 8A is a schematic diagram of an optical component and transmission of an optical signal according to an embodiment of the present invention. As shown in FIG. 8A, a PBS 221 in the first optical path module is configured to: divide an input optical signal into a first optical signal (TM 1) and a second optical signal (TE 2) whose polarization states are different, output the first optical signal (TM 1) to a PR 222, and output the second optical signal (TE 2) to the second input/output separator 24. The PR 222 is configured to: convert the first optical signal (TM 1) into a third optical signal (TE_{TM} 3) whose polarization state is the same as that (TE 2) of the second optical signal, and output the third optical signal (TE_{TM} 3) to the first input/output separator 23. The first input/output separator 23 inputs the third optical signal (TE_{TM} 3) to a microring filter 26 by using an input end of the microring filter 26. The second input/output separator 24 inputs the second optical signal (TE 2) to the microring filter 26 by using a throughput end of the microring filter 26. The microring filter 26 performs resonance processing on the second optical signal (TE 2) and the third optical signal (TE_{TM} 3), to respectively obtain a seventh optical signal (TE 7) and an eighth optical signal (TE_{TM} 8), outputs the seventh optical signal (TE 7) to the third input/output separator 27 by using an add end of the microring filter 26, and outputs the eighth optical signal (TE_{TM} 8) to the fourth input/output separator 28 by using a drop end of the microring filter 26. The seventh optical signal (TE 7) and the eighth optical signal (TE_{TM} 8) are respectively optical signals that are in the second optical signal (TE 2) and the third optical signal (TE_{TM} 3) and that satisfy the resonance condition of the polarization-sensitive optical component. The third input/output separator 27 is configured to output the seventh optical signal (TE 7) to a PR 291, and the fourth input/output separator 28 is configured to output the eighth optical signal (TE_{TM} 8) to a PBC 292. The PR 291 converts the seventh optical signal (TE 7) into a ninth optical signal (TM_{TE} 9) whose polarization state is different from that of the eighth optical signal (TE_{TM} 8), and outputs the ninth optical signal (TM_{TE} 9) to the PBC 292. Finally, the PBC 292 performs beam combination on the eighth optical signal (TE_{TM} 8) and the ninth optical signal (TM_{TE} 9), and outputs a combined optical signal by using the second output end.

It should be noted that TE, TM, TM_{TE}, or TE_{TM} in the foregoing brackets merely represents a polarization state. When the first optical signal is a TE optical signal and the second optical signal is a TM optical signal, a processing process of the optical component is similar to that in the foregoing example. Details are not described herein again.

In conclusion, types and quantities of optical components that the seventh optical signal and the eighth optical signal in the first optical path module that satisfy the resonance condition of the polarization-sensitive optical component pass through are the same. That is, the optical component provided in this embodiment of the present invention can implement two completely symmetric optical paths. Insertion losses of the two optical paths do not vary as an input polarization state changes, and the two optical paths have a same delay, thereby implementing polarization independence of the optical component. Further, in this embodiment of the present invention, two optical signals can be processed by using only one polarization-sensitive optical component. On one hand, costs of a user are reduced. On the other hand, the optical component is always in presence of light. Therefore, a controller can control a status of the polarization-independent optical component.

Second, for an optical signal that is in the second optical path module and that does not satisfy the resonance condition of the polarization-sensitive optical component, the optical component performs the following processing:
The second beam splitting submodule receives an input optical signal by using the second input end, and is configured to: divide the input optical signal into a tenth optical signal and an eleventh optical signal whose polarization states are different, convert the tenth optical signal into a twelfth optical signal whose polarization state is the same as that of the eleventh optical signal, output the twelfth optical signal to the third input/output separator, and output the eleventh optical signal to the fourth input/output separator. The third input/output separator is configured to output the twelfth optical signal to the polarization-sensitive optical component. The fourth input/output separator is configured to output the eleventh optical signal to the polarization-sensitive optical component. The polarization-sensitive optical component is configured to: obtain a thirteenth optical signal based on the eleventh optical signal, and obtain a fourteenth optical signal based on the twelfth optical signal, and output the thirteenth optical signal and the fourteenth optical signal to the third input/output separator and the fourth input/output separator. The third input/output separator is further configured to output the thirteenth optical signal to the fourth input/output separator, and the fourth input/output separator is further configured to output the fourteenth optical signal to the third input/output separator. The thirteenth optical signal and the fourteenth optical signal are respectively optical signals that are in the eleventh optical signal and the twelfth optical signal and that do not satisfy the resonance condition of the polarization-sensitive optical component. The second beam combining submodule is configured to: convert the thirteenth optical signal into a fifteenth optical signal whose polarization state is different from that of the fourteenth optical signal, perform beam combination on the fourteenth optical signal and the fifteenth optical signal, and output a combined optical signal by using the second output end.

The second beam splitting submodule includes a PBS and a PR. The polarization beam splitter PBS is configured to: divide the optical signal that is input by using the second input end into the tenth optical signal and the eleventh optical signal whose polarization states are different, output the eleventh optical signal to the fourth input/output separator, and output the tenth optical signal to the PR. The PR converts the tenth optical signal into the twelfth optical signal whose polarization state is the same as that of the eleventh optical signal, and outputs the twelfth optical signal to the third input/output separator. The PR is further configured to: convert the thirteenth optical signal into the fifteenth optical signal whose polarization state is different from that of the fourteenth optical signal. The PBS is further configured to: perform beam combination on the fourteenth optical signal and the fifteenth optical signal, and output the combined optical signal by using the second output end.

When the tenth optical signal is a TM optical signal and the eleventh optical signal is a TE optical signal, a polarization state of the twelfth optical signal is still TE_{TM}, a polarization state of the thirteenth optical signal is still TE, a polarization state of the fourteenth optical signal is still TE_{TM}, and a polarization state of the fifteenth optical signal is still TM_{TE}. When the tenth optical signal is a TE optical signal and the eleventh optical signal is a TM optical signal, a polarization state of the twelfth optical signal is still TM_{TE}, a polarization state of the thirteenth optical signal is still TM, a polarization state of the fourteenth optical signal is still TM_{TE}, and a polarization state of the fifteenth optical signal is still TE_{TM}.

As stated above, the polarization-sensitive optical component is a microring filter; it is assumed that the first input/output separator, the second input/output separator, the third input/output separator, and the fourth input/output separator are all circulators. The first beam splitting submodule and the second beam splitting submodule each include a PBS and a PR; and the first beam combining submodule and the second beam combining submodule each include a PBC and a PR. The foregoing process is described in detail below: FIG. 8B is a schematic diagram of an optical component and transmission of an optical signal according to another embodiment of the present invention. As shown in FIG. 8B, a PBS 301 in the second beam splitting submodule outputs a tenth optical signal (TM 10) to a PR 302 and outputs an eleventh optical signal (TE 11) to the fourth input/output separator 28. The PR 302 converts the tenth optical signal (TM 10) into a twelfth optical signal (TE_{TM} 12) whose polarization state is the same as that of the eleventh optical signal (TE 11), and outputs the twelfth optical signal (TE_{TM} 12) to the third input/output separator 27. The third input/output separator 27 is configured to output the twelfth optical signal (TE_{TM} 12) to a microring filter 26 by using an add end of the microring filter 26. The fourth input/output separator 28 is configured to output the eleventh optical signal (TE 11) to the microring filter 26 by using a drop end of the microring filter 26. The microring filter 26 is configured to: process the eleventh optical signal (TE 11) and the twelfth optical signal (TE_{TM} 12) to respectively obtain a thirteenth optical signal (TE 13) and a fourteenth optical signal (TE_{TM} 14), output the thirteenth optical signal (TE 13) to the third input/output separator 27 by using the add end of the microring filter 26, and output the fourteenth optical signal (TE_{TM} 14) to the fourth input/output separator 28 by using the drop end of the microring filter 26. The third input/output separator 27 is further configured to output the thirteenth optical signal (TE 13) to a PBC 292. The fourth input/output separator is further configured to output the fourteenth optical signal to a PR 291. The PR 291 is configured to: convert the thirteenth optical signal (TE 13) into a fifteenth optical signal (TM_{TE} 15) whose polarization state is different from that of the fourteenth optical signal (TE_{TM} 14), perform beam combination on the fourteenth optical signal (TE_{TM} 14) and the fifteenth optical signal (TM_{TE} 15), and output a combined optical signal by using the second output end.

It should be noted that TE, TM, TM_{TE}, or TE_{TM} in the foregoing brackets merely represents a polarization state. When the tenth optical signal is a TE optical signal and the eleventh optical signal is a TM optical signal, a processing process of the optical component is similar to that in the foregoing example. Details are not described herein again.

In conclusion, types and quantities of optical components that the fourteenth optical signal and the fifteenth optical signal in the second optical path module that do not satisfy the resonance condition of the polarization-sensitive optical component pass through are the same. That is, the optical component provided in this embodiment of the present invention can implement two completely symmetric optical paths. Insertion losses of the two optical paths do not vary as an input polarization state changes, and the two optical paths have a same delay, thereby implementing polarization independence of the optical component. Further, in this embodiment of the present invention, two optical signals can be processed by using only one polarization-sensitive optical component. On one hand, costs of a user are reduced. On the other hand, the optical component is always in presence of light. Therefore, a controller can control a status of the polarization-independent optical component.

Third, for an optical signal that is in the second optical path module and that satisfies the resonance condition of the polarization-sensitive optical component, the optical component performs the following processing:
The polarization-sensitive optical component is configured to: obtain a sixteenth optical signal based on the eleventh optical signal, obtain a seventeenth optical signal based on the twelfth optical signal, and output the sixteenth optical signal and the seventeenth optical signal to the first input/output separator and the second input/output separator. The first input/output separator is further configured to output the sixteenth optical signal to the first beam combining submodule, and the second input/output separator is further configured to output the seventeenth optical signal to the first beam combining submodule. The sixteenth optical signal and the seventeenth optical signal are optical signals that are in the eleventh optical signal and the twelfth optical signal and that satisfy the resonance condition of the polarization-sensitive optical component. The first beam splitting submodule is configured to: convert the sixteenth optical signal into an eighteenth optical signal whose polarization state is different from that of the seventeenth optical signal, perform beam combination on the seventeenth optical signal and the eighteenth optical signal, and output a combined optical signal by using the first output end.

Optionally, a PR in the first beam combining submodule is further configured to: convert the sixteenth optical signal into the eighteenth optical signal whose polarization state is different from that of the seventeenth optical signal. A PBC in the first beam combining submodule is further configured to: perform beam combination on the seventeenth optical signal and the eighteenth optical signal, and output the combined optical signal by using the first output end.

When the eleventh optical signal is a TE optical signal and a polarization state of the twelfth optical signal is TE_{TM}, a polarization state of the sixteenth optical signal is still TE, a polarization state of the seventeenth optical signal is still TE_{TM}, and a polarization state of the eighteenth optical signal is still TM_{TE}. Alternatively, when the eleventh optical signal is a TM optical signal and a polarization state of the twelfth optical signal is TM_{TE}, a polarization state of the sixteenth optical signal is still TM, a polarization state of the seventeenth optical signal is TM_{TE}, and a polarization state of the eighteenth optical signal is still TE_{TM}.

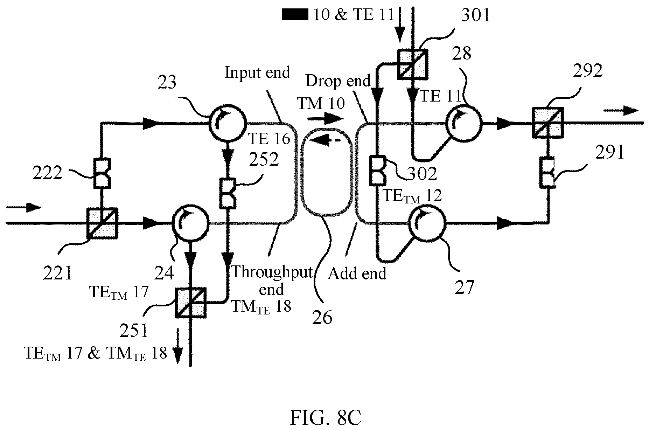

As stated above, the polarization-sensitive optical component is a microring filter; it is assumed that the first input/output separator, the second input/output separator, the third input/output separator, and the fourth input/output separator are all circulators. The first beam splitting submodule and the second beam splitting submodule each include a PBS and a PR; and the first beam combining submodule and the second beam combining submodule each include a PBC and a PR. The foregoing process is described in detail below: FIG. 8C is a schematic diagram of an optical component and transmission of an optical signal according to still another embodiment of the present invention. As shown in FIG. 8C, the third input/output separator 27 inputs an eleventh optical signal (TE 11) to a microring filter 26 by using an add end of the microring filter 26. The fourth input/output separator 28 inputs a twelfth optical signal (TE_{TM} 12) to the microring filter 26 by using a drop end of the microring filter 26. The microring filter 26 performs resonance processing on the eleventh optical signal (TE 11) and the twelfth optical signal (TE_{TM} 12) to respectively obtain a sixteenth optical signal (TE 16) and a seventeenth optical signal (TE_{TM} 17), outputs the sixteenth optical signal (TE 16) to the first input/output separator 23 by using an input end of the microring filter 26, and outputs the seventeenth optical signal (TE_{TM} 17) to the second input/output separator 24 by using a throughput end of the microring filter 26. The first input/output separator 23 is further configured to output the sixteenth optical signal (TE 16) to a PR 252. The second input/output separator 24 is further configured to output the seventeenth optical signal (TE_{TM} 17) to a PBC 251. The PR 252 is configured to convert the sixteenth optical signal (TE 16) into an eighteenth optical signal (TM_{TE} 18) whose polarization state is different from that of the seventeenth optical signal (TE_{TM} 17). The PBC 251 performs beam combination on the seventeenth optical signal (TE_{TM} 17) and the eighteenth optical signal (TM_{TE} 18), and outputs a combined optical signal by using the first output end.

It should be noted that TE, TM, TM_{TE}, or TE_{TM} in the foregoing brackets merely represents a polarization state. When the tenth optical signal is a TE optical signal and the eleventh optical signal is a TM optical signal, a processing process of the optical component is similar to that in the foregoing example. Details are not described herein again.

In conclusion, types and quantities of optical components that the sixteenth optical signal and the seventeenth optical signal in the second optical path module that satisfy the resonance condition of the polarization-sensitive optical component pass through are the same. That is, the optical component provided in this embodiment of the present invention can implement two completely symmetric optical paths. Insertion losses of the two optical paths do not vary as an input polarization state changes, and the two optical paths have a same delay, thereby implementing polarization independence of the optical component. Further, in this embodiment of the present invention, two optical signals can be processed by using only one polarization-sensitive optical component. On one hand, costs of a user are reduced. On the other hand, the optical component is always in presence of light. Therefore, a controller can control a status of the polarization-independent optical component.

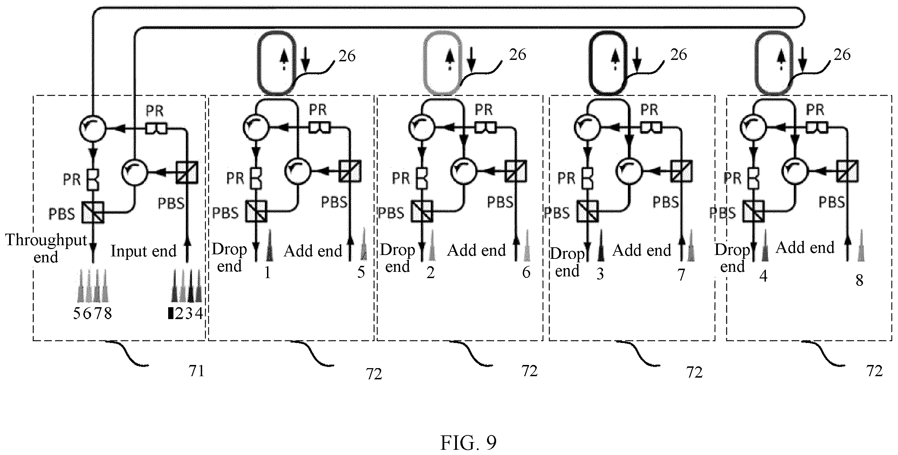

Further, the foregoing optical component may be extended into an optical component including a plurality of second optical path modules, and the second optical path modules are connected in parallel to the first optical path module. FIG. 9 is a schematic diagram of an optical component according to yet another embodiment of the present invention. As shown in FIG. 9, the optical component includes one first optical path module 71 and a plurality of second optical path modules 72. Each second optical path module 72 corresponds to one microring filter 26. Optical signals in the first optical path module 71 and the second optical path modules 72 may be transmitted in the foregoing manner, and details are not described herein again.

It should be noted that, in FIG. 9, an input end of the first optical path module 71 is the foregoing first input end, and a throughput end is the foregoing first output end. Add ends of the second optical path modules 72 are the foregoing second input end, and drop ends are the foregoing second output ends. Numerals 1 to 8 shown in FIG. 7 respectively represent optical signals having different wavelengths. For example, optical signals 1 to 4 may be used as an input signal of the foregoing input end. Obviously, the input signal includes a plurality of optical signals having different wavelengths. For the 1^{st} microring filter 26 in a left-to-right sequence, the optical signal 1 does not satisfy a resonance condition of the microring filter 26, and therefore, is output from a drop end of the 1^{st} second optical path module. Correspondingly, using the 2^{nd} second optical path module 72 as an example, an optical signal 6 is input from an add end. As can be learned from FIG. 7, the optical signal 6 does not satisfy a resonance condition of the 3^{rd} microring filter 26, and therefore, is output to the first optical path module 71 and finally output from a throughput end.

Further, the foregoing optical component may be monolithically integrated.

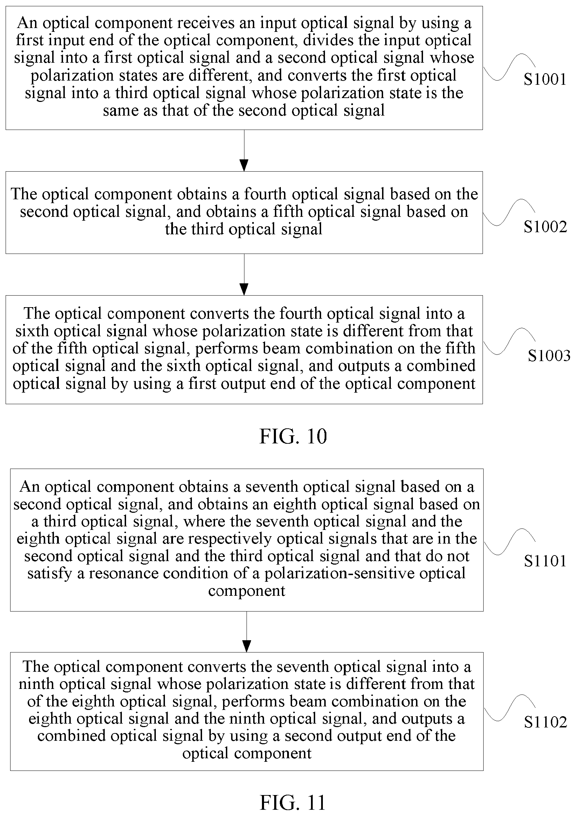

FIG. 10 is a flowchart of an optical signal processing method according to an embodiment of the present invention. As shown in FIG. 10, the method includes the following steps:
Step S1001: An optical component receives an input optical signal by using a first input end of the optical component, divides the input optical signal into a first optical signal and a second optical signal whose polarization states are different, and converts the first optical signal into a third optical signal whose polarization state is the same as that of the second optical signal.
Step S1002: The optical component obtains a fourth optical signal based on the second optical signal, and obtains a fifth optical signal based on the third optical signal.
Step S1003: The optical component converts the fourth optical signal into a sixth optical signal whose polarization state is different from that of the fifth optical signal, performs beam combination on the fifth optical signal and the sixth optical signal, and outputs a combined optical signal by using a first output end of the optical component.

The present invention provides the optical signal processing method. The optical component shown in FIG. 2 can perform steps of the method. Their implementation principles and technical effects are similar, and details are not described herein again.

The optical component includes a polarization-sensitive optical component, which is a microring filter. The fourth optical signal and the fifth optical signal are respectively optical signals that are in the second optical signal and the third optical signal and that satisfy a resonance condition of the polarization-sensitive optical component.

FIG. 11 is a flowchart of an optical signal processing method according to another embodiment of the present invention. As shown in FIG. 11, the method includes the following steps:
Step S1101: An optical component obtains a seventh optical signal based on a second optical signal, and obtains an eighth optical signal based on a third optical signal, where the seventh optical signal and the eighth optical signal are respectively optical signals that are in the second optical signal and the third optical signal and that do not satisfy a resonance condition of a polarization-sensitive optical component.
Step S1102: The optical component converts the seventh optical signal into a ninth optical signal whose polarization state is different from that of the eighth optical signal, performs beam combination on the eighth optical signal and the ninth optical signal, and outputs a combined optical signal by using a second output end of the optical component.

The present invention provides the optical signal processing method. The optical component shown in FIG. 6A can perform steps of the method. Their implementation principles and technical effects are similar, and details are not described herein again.

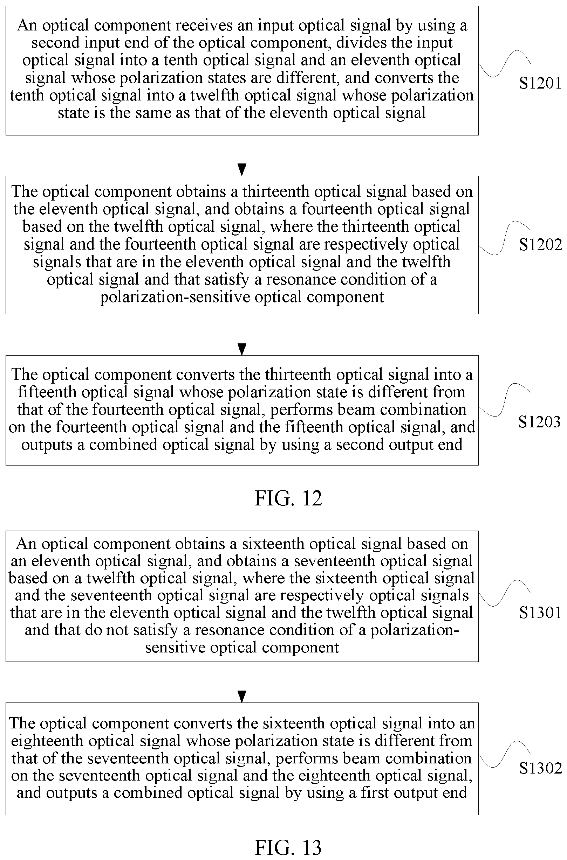

FIG. 12 is a flowchart of an optical signal processing method according to still another embodiment of the present invention. As shown in FIG. 12, the method includes the following steps:
Step S1201: An optical component receives an input optical signal by using a second input end of the optical component, divides the input optical signal into a tenth optical signal and an eleventh optical signal whose polarization states are different, and converts the tenth optical signal into a twelfth optical signal whose polarization state is the same as that of the eleventh optical signal.
Step S1202: The optical component obtains a thirteenth optical signal based on the eleventh optical signal, and obtains a fourteenth optical signal based on the twelfth optical signal, where the thirteenth optical signal and the fourteenth optical signal are respectively optical signals that are in the eleventh optical signal and the twelfth optical signal and that satisfy a resonance condition of a polarization-sensitive optical component.
Step S1203: The optical component converts the thirteenth optical signal into a fifteenth optical signal whose polarization state is different from that of the fourteenth optical signal, performs beam combination on the fourteenth optical signal and the fifteenth optical signal, and outputs a combined optical signal by using a second output end.

The present invention provides the optical signal processing method. The optical component shown in FIG. 6B can perform steps of the method. Their implementation principles and technical effects are similar, and details are not described herein again.

FIG. 13 is a flowchart of an optical signal processing method according to yet another embodiment of the present invention. As shown in FIG. 13, the method includes the following steps:
Step S1301: An optical component obtains a sixteenth optical signal based on an eleventh optical signal, and obtains a seventeenth optical signal based on a twelfth optical signal, where the sixteenth optical signal and the seventeenth optical signal are respectively optical signals that are in the eleventh optical signal and the twelfth optical signal and that do not satisfy a resonance condition of a polarization-sensitive optical component.
Step S1302: The optical component converts the sixteenth optical signal into an eighteenth optical signal whose polarization state is different from that of the seventeenth optical signal, performs beam combination on the seventeenth optical signal and the eighteenth optical signal, and outputs a combined optical signal by using a first output end.

The present invention provides the optical signal processing method. The optical component shown in FIG. 6C can perform steps of the method. Their implementation principles and technical effects are similar, and details are not described herein again.

The optical component includes the polarization-sensitive optical component. The fourth optical signal and the fifth optical signal are respectively optical signals that are in the second optical signal and the third optical signal and that do not satisfy the resonance condition of the polarization-sensitive optical component.

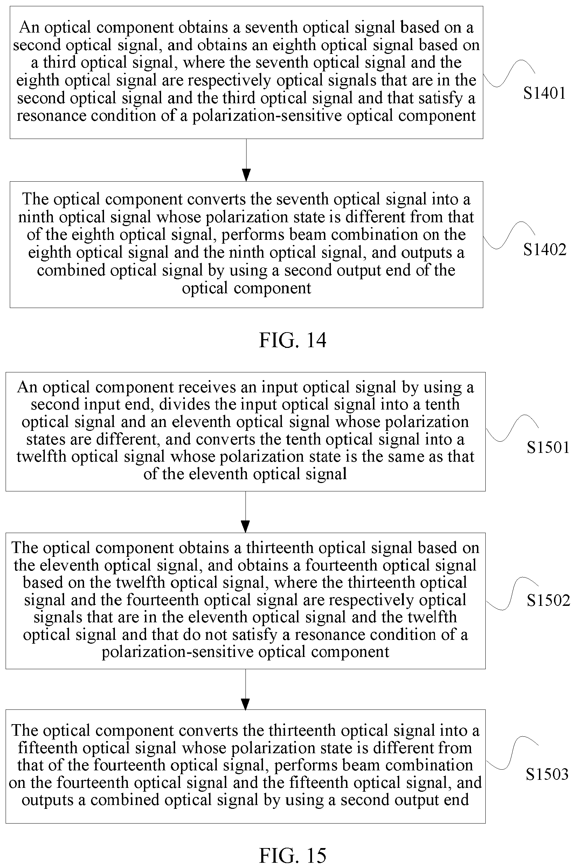

FIG. 14 is a flowchart of an optical signal processing method according to still yet another embodiment of the present invention. As shown in FIG. 14, the method includes the following steps:
Step S1401: An optical component obtains a seventh optical signal based on a second optical signal, and obtains an eighth optical signal based on a third optical signal, where the seventh optical signal and the eighth optical signal are respectively optical signals that are in the second optical signal and the third optical signal and that satisfy a resonance condition of a polarization-sensitive optical component.
Step S1402: The optical component converts the seventh optical signal into a ninth optical signal whose polarization state is different from that of the eighth optical signal, performs beam combination on the eighth optical signal and the ninth optical signal, and outputs a combined optical signal by using a second output end of the optical component.

The present invention provides the optical signal processing method. The optical component shown in FIG. 8A can perform steps of the method. Their implementation principles and technical effects are similar, and details are not described herein again.

FIG. 15 is a flowchart of a further optical signal processing method. As shown in FIG. 15, the method includes the following steps:
Step S1501: An optical component receives an input optical signal by using a second input end, divides the input optical signal into a tenth optical signal and an eleventh optical signal whose polarization states are different, and converts the tenth optical signal into a twelfth optical signal whose polarization state is the same as that of the eleventh optical signal.
Step S1502: The optical component obtains a thirteenth optical signal based on the eleventh optical signal, and obtains a fourteenth optical signal based on the twelfth optical signal, where the thirteenth optical signal and the fourteenth optical signal are respectively optical signals that are in the eleventh optical signal and the twelfth optical signal and that do not satisfy a resonance condition of a polarization-sensitive optical component.
Step S1503: The optical component converts the thirteenth optical signal into a fifteenth optical signal whose polarization state is different from that of the fourteenth optical signal, performs beam combination on the fourteenth optical signal and the fifteenth optical signal, and outputs a combined optical signal by using a second output end.

The present invention provides the optical signal processing method. The optical component shown in FIG. 8B can perform steps of the method. Their implementation principles and technical effects are similar, and details are not described herein again.

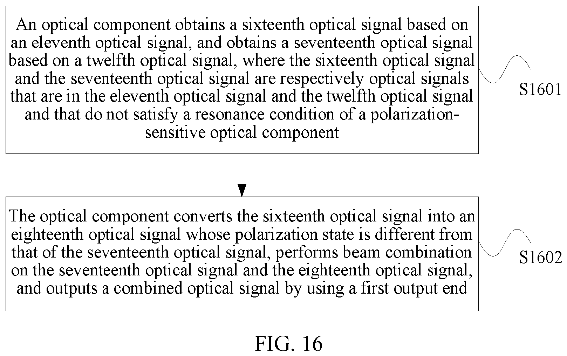

FIG. 16 is a flowchart of a still further optical signal processing method. As shown in FIG. 16, the method includes the following steps:
Step S1601: An optical component obtains a sixteenth optical signal based on an eleventh optical signal, and obtains a seventeenth optical signal based on a twelfth optical signal, where the sixteenth optical signal and the seventeenth optical signal are respectively optical signals that are in the eleventh optical signal and the twelfth optical signal and that satisfy a resonance condition of a polarization-sensitive optical component.
Step S1602: The optical component converts the sixteenth optical signal into an eighteenth optical signal whose polarization state is different from that of the seventeenth optical signal, performs beam combination on the seventeenth optical signal and the eighteenth optical signal, and outputs a combined optical signal by using a first output end.

The present invention provides the optical signal processing method. The optical component shown in FIG. 8C can perform steps of the method. Their implementation principles and technical effects are similar, and details are not described herein again.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments without departing from the scope of the present invention as defined by the claims.

## Claims

1. An optical component, comprising: a first optical path module (71) and a polarization-sensitive optical component (21), wherein the first optical path module comprises: a first beam splitting submodule (22), a first input/output separator (23), a first beam combining submodule (25), and a second input/output separator (24), wherein the first beam splitting submodule comprises a polarization beam splitter (221) and a polarization rotator (222), wherein the first beam combining submodule comprises a polarization beam combiner (251) and a polarization rotator (252), and wherein the polarization-sensitive optical component is a microring filter (26); wherein the first beam splitting submodule receives an input optical signal by using a first input end, and is configured to: divide the input optical signal into a first optical signal and a second optical signal whose polarization states are different, convert the first optical signal into a third optical signal whose polarization state is the same as that of the second optical signal, output the third optical signal to the first input/output separator, and output the second optical signal to the second input/output separator;
the first input/output separator is configured to output the third optical signal to the polarization-sensitive optical component;
the second input/output separator is configured to output the second optical signal to the polarization-sensitive optical component;
the polarization-sensitive optical component is configured to: obtain a fourth optical signal based on the second optical signal, obtain a fifth optical signal based on the third optical signal, and output the fourth optical signal and the fifth optical signal to the first input/output separator and the second input/output separator;
the first input/output separator is further configured to output the fourth optical signal to the first beam combining submodule, and the second input/output separator is further configured to output the fifth optical signal to the first beam combining submodule; and
the first beam combining submodule is configured to: convert the fourth optical signal into a sixth optical signal whose polarization state is different from that of the fifth optical signal, perform beam combination on the fifth optical signal and the sixth optical signal, and output a combined optical signal by using a first output end.

2. The optical component according to claim 1, wherein the fourth optical signal and the fifth optical signal are respectively optical signals that are in the second optical signal and the thrid optical signal and that satisfy a resonance condition of the polarization-sensitive optical component.

3. The optical component according to claim 2, further comprising: a second optical path module (72), wherein the second optical path module comprises: a second beam splitting submodule, a third input/output separator (27), a fourth input/output separator (28), and a second beam combining submodule, wherein the second beam splitting submodule comprises a polarization beam splitter (301) and a polarization rotator (302), and wherein the second beam combining submodule comprises a polarization beam combiner (292) and a polarization rotator (291); wherein the polarization-sensitive optical component is further configured to: obtain a seventh optical signal based on the second optical signal, obtain an eighth optical signal based on the third optical signal, and respectively output the seventh optical signal and the eighth optical signal to the third input/output separator and the fourth input/output separator, wherein the seventh optical signal and the eighth optical signal are respectively optical signals that are in the second optical signal and the third optical signal and that do not satisfy the resonance condition of the polarization-sensitive optical component;
the third input/output separator is configured to output the seventh optical signal to the second beam combining submodule;
the fourth input/output separator is configured to output the eighth optical signal to the second beam combining submodule; and
the second beam combining submodule is configured to: convert the seventh optical signal into a ninth optical signal whose polarization state is different from that of the eighth optical signal, perform beam combination on the eighth optical signal and the ninth optical signal, and output a combined optical signal by using a second output end.

4. The optical component according to claim 3, wherein the second beam splitting submodule receives an input optical signal by using a second input end, and is configured to: divide the input optical signal into a tenth optical signal and an eleventh optical signal whose polarization states are different, convert the tenth optical signal into a twelfth optical signal whose polarization state is the same as that of the eleventh optical signal, output the twelfth optical signal to the third input/output separator, and output the eleventh optical signal to the fourth input/output separator;
the third input/output separator is configured to output the twelfth optical signal to the polarization-sensitive optical component;
the fourth input/output separator is configured to output the eleventh optical signal to the polarization-sensitive optical component;
the polarization-sensitive optical component is configured to: obtain a thirteenth optical signal based on the eleventh optical signal, obtain a fourteenth optical signal based on the twelfth optical signal, and output the thirteenth optical signal and the fourteenth optical signal to the third input/output separator and the fourth input/output separator;
the third input/output separator is further configured to output the thirteenth optical signal to the second beam combining submodule, and the fourth input/output separator is further configured to output the fourteenth optical signal to the second beam combining submodule, wherein the thirteenth optical signal and the fourteenth optical signal are respectively optical signals that are in the eleventh optical signal and the twelfth optical signal and that satisfy the resonance condition of the polarization-sensitive optical component; and
the second beam combining submodule is configured to: convert the thirteenth optical signal into a fifteenth optical signal whose polarization state is different from that of the fourteenth optical signal, perform beam combination on the fourteenth optical signal and the fifteenth optical signal, and output a combined optical signal by using the second output end.

5. The optical component according to claim 4, wherein the polarization-sensitive optical component is configured to: obtain a sixteenth optical signal based on the eleventh optical signal, obtain a seventeenth optical signal based on the twelfth optical signal, and output the sixteenth optical signal and the seventeenth optical signal to the first input/output separator and the second input/output separator;
the first input/output separator is further configured to output the sixteenth optical signal to the first beam combining submodule, and the second input/output separator is further configured to output the seventeenth optical signal to the first beam combining submodule, wherein the sixteenth optical signal and the seventeenth optical signal are respectively optical signals that are in the eleventh optical signal and the twelfth optical signal and that do not satisfy the resonance condition of the polarization-sensitive optical component; and
the first beam combining submodule is configured to: convert the sixteenth optical signal into an eighteenth optical signal whose polarization state is different from that of the seventeenth optical signal, perform beam combination on the seventeenth optical signal and the eighteenth optical signal, and output a combined optical signal by using the first output end.

6. The optical component according to claim 1, wherein the fourth optical signal and the fifth optical signal are respectively optical signals that are in the second optical signal and the third optical signal and that do not satisfy a resonance condition of the polarization-sensitive optical component.

7. The optical component according to claim 6, further comprising: a second optical path module (72), wherein the second optical path module comprises: a second beam splitting submodule, a third input/output separator (27), a fourth input/output separator (28), and a second beam combining submodule, wherein the second beam splitting submodule comprises a polarization beam splitter (301) and a polarization rotator (302), and wherein the second beam combining submodule comprises a polarization beam combiner (292) and a polarization rotator (291); wherein the polarization-sensitive optical component obtains a seventh optical signal based on the second optical signal, obtains an eighth optical signal based on the third optical signal, and respectively outputs the seventh optical signal and the eighth optical signal to the third input/output separator and the fourth input/output separator, wherein the seventh optical signal and the eighth optical signal are respectively optical signals that are in the second optical signal and the third optical signal and that satisfy the resonance condition of the polarization-sensitive optical component;
the third input/output separator is configured to output the seventh optical signal to the second beam combining submodule;
the fourth input/output separator is configured to output the eighth optical signal to the second beam combining submodule; and
the second beam combining submodule is configured to: convert the seventh optical signal into a ninth optical signal whose polarization state is different from that of the eighth optical signal, perform beam combination on the eighth optical signal and the ninth optical signal, and output a combined optical signal by using a second output end.

8. The optical component according to claim 7, wherein the second beam splitting submodule receives an input optical signal by using a second input end, and is configured to: divide the input optical signal into a tenth optical signal and an eleventh optical signal whose polarization states are different, convert the tenth optical signal into a twelfth optical signal whose polarization state is the same as that of the eleventh optical signal, output the twelfth optical signal to the third input/output separator, and output the eleventh optical signal to the fourth input/output separator;
the third input/output separator is configured to output the twelfth optical signal to the polarization-sensitive optical component;
the fourth input/output separator is configured to output the eleventh optical signal to the polarization-sensitive optical component;
the polarization-sensitive optical component is configured to: obtain a thirteenth optical signal based on the eleventh optical signal, obtain a fourteenth optical signal based on the twelfth optical signal, and output the thirteenth optical signal and the fourteenth optical signal to the third input/output separator and the fourth input/output separator;
the third input/output separator is further configured to output the thirteenth optical signal to the fourth input/output separator, and the fourth input/output separator is further configured to output the fourteenth optical signal to the third input/output separator, wherein the thirteenth optical signal and the fourteenth optical signal are respectively optical signals that are in the eleventh optical signal and the twelfth optical signal and that do not satisfy the resonance condition of the polarization-sensitive optical component; and
the second beam combining submodule is configured to: convert the thirteenth optical signal into a fifteenth optical signal whose polarization state is different from that of the fourteenth optical signal, perform beam combination on the fourteenth optical signal and the fifteenth optical signal, and output a combined optical signal by using the second output end.

9. An optical signal processing method with an optical component comprising a first optical path module (71) and a polarization-sensitive optical component (21), wherein the first optical path module comprises: a first beam splitting submodule (22), a first input/output separator (23), a first beam combining submodule (25), and a second input/output separator (24), wherein the first beam splitting submodule comprises a polarization beam splitter (221) and a polarization rotator (222), wherein the first beam combining submodule comprises a polarization beam combiner (251) and a polarization rotator (252), and wherein the polarization-sensitive optical component is a microring filter (26), wherein the method comprises:
receiving (S1001), by the first beam splitting submodule, an input optical signal by using a first input end of the first beam splitting submodule, dividing the input optical signal into a first optical signal and a second optical signal whose polarization states are different, and converting the first optical signal into a third optical signal whose polarization state is the same as that of the second optical signal;
outputting, by the first input/output separator, the third optical signal to the polarization-sensitive optical component;
outputting, by the second input/output separator, the second optical signal to the polarization-sensitive optical component;
obtaining (S 1002), by the polarization-sensitive optical component, a fourth optical signal based on the second optical signal, and obtaining a fifth optical signal based on the third optical signal and outputting the fourth optical signal and the fifth optical signal to the first input/output separator and the second input/output separator;
outputting, by the first input/output separator, the fourth optical signal to the first beam combining submodule;
outputting, by the second input/output separator, the fifth optical signal to the first beam combining submodule; and
converting (S 1003), by the first beam combining submodule, the fourth optical signal into a sixth optical signal whose polarization state is different from that of the fifth optical signal, performing beam combination on the fifth optical signal and the sixth optical signal, and outputting a combined optical signal by using a first output end of the optical component.

10. The method according to claim 9, wherein the fourth optical signal and the fifth optical signal are respectively optical signals that are in the second optical signal and the third optical signal and that satisfy a resonance condition of the polarization-sensitive optical component.

11. The method according to claim 10, wherein the optical component comprises a second optical path module (72), wherein the second optical path module comprises: a second beam splitting submodule, a third input/output separator (27), a fourth input/output separator (28), and a second beam combining submodule, "wherein the second beam splitting submodule comprises a polarization beam splitter (301) and a polarization rotator (302), and wherein the second beam combining submodule comprises a polarization beam combiner (292) and a polarization rotator (291), and the method further comprises:
obtaining (S1101), by the polarization-sensitive optical component, a seventh optical signal based on the second optical signal, and obtaining an eighth optical signal based on the third optical signal, wherein the seventh optical signal and the eighth optical signal are respectively optical signals that are in the second optical signal and the third optical signal and that do not satisfy the resonance condition of the polarization-sensitive optical component;
outputting, by the third input/output separator, the seventh optical signal to the second beam combining submodule;
outputting, by the fourth input/output separator, the eighth optical signal to the second beam combining submodule: and
converting (S1102), by the second beam combining submodule, the seventh optical signal into a ninth optical signal whose polarization state is different from that of the eighth optical signal, performing beam combination on the eighth optical signal and the ninth optical signal, and outputting a combined optical signal by using a second output end of the second beam combining submodule.

12. The method according to claim 11, further comprising:
receiving (S1201), by the second beam splitting submodule, an input optical signal by using a second input end of the second beam splitting submodule, dividing the input optical signal into a tenth optical signal and an eleventh optical signal whose polarization states are different, and converting the tenth optical signal into a twelfth optical signal whose polarization state is the same as that of the eleventh optical signal;
outputting, by the third input/output separator, the twelfth optical signal to the polarization-sensitive optical component;
outputting, by the fourth input/output separator, the eleventh optical signal to the polarization-sensitive optical component;
obtaining (S1202), by the polarization-sensitive optical component, a thirteenth optical signal based on the eleventh optical signal, and obtaining a fourteenth optical signal based on the twelfth optical signal, wherein the thirteenth optical signal and the fourteenth optical signal are respectively optical signals that are in the eleventh optical signal and the twelfth optical signal and that satisfy the resonance condition of the polarization-sensitive optical component;
outputting, by the third input/output separator, the thirteenth optical signal to the fourth input/output separator, and outputting, by the fourth input/output separator, the fourteenth optical signal to the third input/output separator, wherein the thirteenth optical signal and the fourteenth optical signal are respectively optical signals that are in the eleventh optical signal and the twelfth optical signal and that do not satisfy the resonance condition of the polarization-sensitive optical component; and
converting (S1203), by the second beam combining submodule, the thirteenth optical signal into a fifteenth optical signal whose polarization state is different from that of the fourteenth optical signal, performing beam combination on the fourteenth optical signal and the fifteenth optical signal, and outputting a combined optical signal by using the second output end.

13. The method according to claim 12, further comprising:
obtaining (S1301), by the polarization-sensitive optical component, a sixteenth optical signal based on the eleventh optical signal, and obtaining a seventeenth optical signal based on the twelfth optical signal, wherein the sixteenth optical signal and the seventeenth optical signal are respectively optical signals that are in the eleventh optical signal and the twelfth optical signal and that do not satisfy the resonance condition of the polarization-sensitive optical component;
outputting, by the first input/output separator, the sixteenth optical signal to the first beam combining submodule, and outputting, by the second input/output separator, the seventeenth optical signal to the first beam combining submodule, wherein the sixteenth optical signal and the seventeenth optical signal are respectively optical signals that are in the eleventh optical signal and the twelfth optical signal and that do not satisfy the resonance condition of the polarization-sensitive optical component; and
converting (S1302), by the first beam combining submodule, the sixteenth optical signal into an eighteenth optical signal whose polarization state is different from that of the seventeenth optical signal, performing beam combination on the seventeenth optical signal and the eighteenth optical signal, and outputting a combined optical signal by using the first output end.

14. The method according to claim 9, wherein the fourth optical signal and the fifth optical signal are respectively optical signals that are in the second optical signal and the third optical signal and that do not satisfy a resonance condition of the polarization-sensitive optical component.

15. The method according to claim 14, wherein the optical component comprises: a second optical path module (72), wherein the second optical path module comprises: a second beam splitting submodule, a third input/output separator (27), a fourth input/output separator (28), and a second beam combining submodule, wherein the second beam splitting submodule comprises a polarization beam splitter (301) and a polarization rotator (302), and wherein the second beam combining submodule comprises a polarization beam combiner (292) and a polarization rotator (291), and wherein the method further comprises:
obtaining (S1401), by the polarization-sensitive optical component, a seventh optical signal based on the second optical signal, and obtaining an eighth optical signal based on the third optical signal, wherein the seventh optical signal and the eighth optical signal are respectively optical signals that are in the second optical signal and the third optical signal and that satisfy the resonance condition of the polarization-sensitive optical component;
outputting, by the third input/output separator, the seventh optical signal to the second beam combining submodule;
outputting, by the fourth input/output separator, the eighth optical signal to the second beam combining submodule; and
converting (S 1402), by the second beam combining submodule, the seventh optical signal into a ninth optical signal whose polarization state is different from that of the eighth optical signal, performing beam combination on the eighth optical signal and the ninth optical signal, and outputting a combined optical signal by using a second output end of the second beam combining submodule.

## Patentansprüche

1. Optische Komponente, umfassend: ein erstes Strahlengangmodul (71) und eine polarisierungsempfindliche optische Komponente (21), wobei das erste Strahlengangmodul umfasst: ein erstes Strahlteilungsteilmodul (22), einen ersten Eingangs/Ausgangs-Trenner (23), ein erstes Strahlkombinierteilmodul (25) und einen zweiten Eingangs/Ausgangs-Trenner (24), wobei das erste Strahlteilungsteilmodul einen Polarisierungsstrahlteiler (221) und einen Polarisierungsdreher (222) umfasst, wobei das erste Strahlkombinierteilmodul einen Polarisierungsstrahlkombinierer (251) und einen Polarisierungsdreher (252) umfasst und wobei die polarisierungsempfindliche optische Komponente ein Mikroringfilter (26) ist;
wobei
das erste Strahlteilungsteilmodul ein optisches Eingangssignal unter Verwendung eines ersten Eingangsendes empfängt und konfiguriert ist zum: Teilen des optischen Eingangssignals in ein erstes optisches Signal und ein zweites optisches Signal, deren Polarisierungszustände verschieden sind, Umwandeln des ersten optischen Signals in ein drittes optisches Signal, dessen Polarisierungszustand gleich dem des zweiten optischen Signals ist, Ausgeben des dritten optischen Signals an den ersten Eingangs/Ausgangs-Trenner und Ausgeben des zweiten optischen Signals an den zweiten Eingangs/Ausgangs-Trenner;
der erste Eingangs/Ausgangs-Trenner dazu konfiguriert ist, das dritte optische Signal an die polarisierungsempfindliche optische Komponente auszugeben;
der zweite Eingangs/Ausgangs-Trenner dazu konfiguriert ist, das zweite optische Signale an die polarisierungsempfindliche optische Komponente auszugeben;
die polarisierungsempfindliche optische Komponente konfiguriert ist zum: Erlangen eines vierten optischen Signals auf Grundlage des zweiten optischen Signals, Erlangen eines fünften optischen Signals auf Grundlage des dritten optischen Signals und Ausgeben des vierten optischen Signals und des fünften optischen Signals an den ersten Eingangs/Ausgangs-Trenner und den zweiten Eingangs/Ausgangs-Trenner;
der erste Eingangs/Ausgangs-Trenner ferner dazu konfiguriert ist, das vierte optische Signal an das erste Strahlkombinierteilmodul auszugeben, und der zweite Eingangs/Ausgangs-Trenner ferner dazu konfiguriert ist, das fünfte optische Signal an das erste Strahlkombinierteilmodul auszugeben; und
das erste Strahlkombinierteilmodul konfiguriert ist zum: Umwandeln des vierten optischen Signals in ein sechstes optisches Signal, dessen Polarisierungszustand von dem des fünften optischen Signals verschieden ist, Durchführen einer Strahlkombination an dem fünften optischen Signal und dem sechsten optischen Signal und Ausgeben eines kombinierten optischen Signals unter Verwendung eines ersten Ausgangsendes.

2. Optische Komponente nach Anspruch 1, wobei das vierte optische Signal und das fünfte optische Signale optische Signale sind, die in dem zweiten optischen Signal bzw. dem dritten optischen Signal vorhanden sind und die eine Resonanzbedingung der polarisierungsempfindlichen optischen Komponente erfüllen.

3. Optische Komponente nach Anspruch 2, ferner umfassend: ein zweites Strahlengangmodul (72), wobei das zweite Strahlengangmodul umfasst: ein zweites Strahlteilungsteilmodul, einen dritten Eingangs/Ausgangs-Trenner (27), einen vierten Eingangs/Ausgangs-Trenner (28) und ein zweites Strahlkombinierteilmodul,
wobei das zweite Strahlteilungsteilmodul einen Polarisierungsstrahlteiler (301) und einen Polarisierungsdreher (302) umfasst,
und wobei das zweite Strahlkombinierteilmodul einen Polarisierungsstrahlkombinierer (292) und einen Polarisierungsdreher (291) umfasst;
wobei
die polarisierungsempfindliche optische Komponente ferner konfiguriert ist zum: Erlangen eines siebten optischen Signals auf Grundlage des zweiten optischen Signals, Erlangen eines achten optischen Signals auf Grundlage des dritten optischen Signals und Ausgeben des siebten optischen Signals und des achten optischen Signals an den dritten Eingangs/Ausgangs-Trenner bzw. den vierten Eingangs/Ausgangs-Trenner, wobei das siebte optische Signal und das achte optische Signal optische Signale sind, die in dem zweiten optischen Signal bzw. dem dritten optischen Signal vorhanden sind und welche die Resonanzbedingung der polarisierungsempfindlichen optischen Komponente nicht erfüllen;
der dritte Eingangs/Ausgangs-Trenner dazu konfiguriert ist, das siebte optische Signal an das zweite Strahlkombinierteilmodul auszugeben;
der vierte Eingangs/Ausgangs-Trenner dazu konfiguriert ist, das achte optische Signal an das zweite Strahlkombinierteilmodul auszugeben; und
das zweite Strahlkombinierteilmodul konfiguriert ist zum: Umwandeln des siebten optischen Signals in ein neuntes optisches Signal, dessen Polarisierungszustand von dem des achten optischen Signals verschieden ist, Durchführen einer Strahlkombination an dem achten optischen Signal und dem neunten optischen Signal und Ausgeben eines kombinierten optischen Signals unter Verwendung eines zweiten Ausgangsendes.

4. Optische Komponente nach Anspruch 3, wobei das zweite Strahlteilungsteilmodul ein optisches Eingangssignal unter Verwendung eines zweiten Eingangsendes empfängt und konfiguriert ist zum: Teilen des optischen Eingangssignals in ein zehntes optisches Signal und ein elftes optisches Signal, deren Polarisierungszustände verschieden sind, Umwandeln des zehnten optischen Signals in ein zwölftes optisches Signal, dessen Polarisierungszustand gleich dem des elften optischen Signals ist, Ausgeben des zwölften optischen Signals an den dritten Eingangs/Ausgangs-Trenner und Ausgeben des elften optischen Signals an den vierten Eingangs/Ausgangs-Trenner;
der dritte Eingangs/Ausgangs-Trenner dazu konfiguriert ist, das zwölfte optische Signal an die polarisierungsempfindliche optische Komponente auszugeben;
der vierte Eingangs/Ausgangs-Trenner dazu konfiguriert ist, das elfte optische Signale an die polarisierungsempfindliche optische Komponente auszugeben;
die polarisierungsempfindliche optische Komponente konfiguriert ist zum: Erlangen eines dreizehnten optischen Signals auf Grundlage des elften optischen Signals, Erlangen eines vierzehnten optischen Signals auf Grundlage des zwölften optischen Signals und Ausgeben des dreizehnten optischen Signals und des vierzehnten optischen Signals an den dritten Eingangs/Ausgangs-Trenner und den vierten Eingangs/Ausgangs-Trenner;
der dritte Eingangs/Ausgangs-Trenner ferner dazu konfiguriert ist, das dreizehnte optische Signal an das zweite Strahlkombinierteilmodul auszugeben, und der vierte Eingangs/Ausgangs-Trenner ferner dazu konfiguriert ist, das vierzehnte optische Signal an das zweite Strahlkombinierteilmodul auszugeben, wobei das dreizehnte optische Signal und das vierzehnte optische Signal optische Signale sind, die in dem elften optischen Signal bzw. dem zwölften optischen Signal vorhanden sind und welche die Resonanzbedingung der polarisierungsempfindlichen optischen Komponente erfüllen; und
das zweite Strahlkombinierteilmodul konfiguriert ist zum: Umwandeln des dreizehnten optischen Signals in ein fünfzehntes optisches Signal, dessen Polarisierungszustand von dem des fünften optischen Signals verschieden ist, Durchführen einer Strahlkombination an dem vierzehnten optischen Signal und dem fünfzehnten optischen Signal und Ausgeben eines kombinierten optischen Signals unter Verwendung des zweiten Ausgangsendes.

5. Optische Komponente nach Anspruch 4, wobei die polarisierungsempfindliche optische Komponente konfiguriert ist zum: Erlangen eines sechzehnten optischen Signals auf Grundlage des elften optischen Signals, Erlangen eines siebzehnten optischen Signals auf Grundlage des zwölften optischen Signals und Ausgeben des sechzehnten optischen Signals und des siebzehnten optischen Signals an den ersten Eingangs/Ausgangs-Trenner und den zweiten Eingangs/Ausgangs-Trenner;
der erste Eingangs/Ausgangs-Trenner ferner dazu konfiguriert ist, das sechzehnte optische Signal an das erste Strahlkombinierteilmodul auszugeben, und der zweite Eingangs/Ausgangs-Trenner ferner dazu konfiguriert ist, das siebzehnte optische Signal an das erste Strahlkombinierteilmodul auszugeben, wobei das sechzehnte optische Signal und das siebzehnte optische Signal optische Signale sind, die in dem elften optischen Signal bzw. dem zwölften optischen Signal vorhanden sind und welche die Resonanzbedingung der polarisierungsempfindlichen optischen Komponente nicht erfüllen; und
das erste Strahlkombinierteilmodul konfiguriert ist zum: Umwandeln des sechzehnten optischen Signals in ein achtzehntes optisches Signal, dessen Polarisierungszustand von dem des siebzehnten optischen Signals verschieden ist, Durchführen einer Strahlkombination an dem siebzehnten optischen Signal und dem achtzehnten optischen Signal und Ausgeben eines kombinierten optischen Signals unter Verwendung des ersten Ausgangsendes.

6. Optische Komponente nach Anspruch 1, wobei das vierte optische Signal und das fünfte optische Signal optische Signale sind, die in dem zweiten optischen Signal bzw. dem dritten optischen Signal vorhanden sind und die eine Resonanzbedingung der polarisierungsempfindlichen optischen Komponente nicht erfüllen.

7. Optische Komponente nach Anspruch 6, ferner umfassend: ein zweites Strahlengangmodul (72), wobei das zweite Strahlengangmodul umfasst: ein zweites Strahlteilungsteilmodul, einen dritten Eingangs/Ausgangs-Trenner (27), einen vierten Eingangs/Ausgangs-Trenner (28) und ein zweites Strahlkombinierteilmodul, wobei das zweite Strahlteilungsteilmodul einen Polarisierungsstrahlteiler (301) und einen Polarisierungsdreher (302) umfasst und wobei das zweite Strahlkombinierteilmodul einen Polarisierungsstrahlkombinierer (292) und einen Polarisierungsdreher (291) umfasst;
wobei
die polarisierungsempfindliche optische Komponente ein siebtes optisches Signal auf Grundlage des zweiten optischen Signals erlangt, ein achtes optisches Signal auf Grundlage des dritten optischen Signals erlangt und das siebte optische Signal und das achte optische Signal an den dritten Eingangs/Ausgangs-Trenner bzw. den vierten Eingangs/Ausgangs-Trenner ausgibt, wobei das siebte optische Signal und das achte optische Signal optische Signale sind, die in dem zweiten optischen Signal bzw. dem dritten optischen Signal vorhanden sind und welche die Resonanzbedingung der polarisierungsempfindlichen optischen Komponente erfüllen; der dritte Eingangs/Ausgangs-Trenner dazu konfiguriert ist, das siebte optische Signal an das zweite Strahlkombinierteilmodul auszugeben;
der vierte Eingangs/Ausgangs-Trenner dazu konfiguriert ist, das achte optische Signal an das zweite Strahlkombinierteilmodul auszugeben; und
das zweite Strahlkombinierteilmodul konfiguriert ist zum: Umwandeln des siebten optischen Signals in ein neuntes optisches Signal, dessen Polarisierungszustand von dem des achten optischen Signals verschieden ist, Durchführen einer Strahlkombination an dem achten optischen Signal und dem neunten optischen Signal und Ausgeben eines kombinierten optischen Signals unter Verwendung eines zweiten Ausgangsendes.

8. Optische Komponente nach Anspruch 7, wobei das zweite Strahlteilungsteilmodul ein optisches Eingangssignal unter Verwendung eines zweiten Eingangsendes empfängt und konfiguriert ist zum: Teilen des optischen Eingangssignals in ein zehntes optisches Signal und ein elftes optisches Signal, deren Polarisierungszustände verschieden sind, Umwandeln des zehnten optischen Signals in ein zwölftes optisches Signal, dessen Polarisierungszustand gleich dem des elften optischen Signals ist, Ausgeben des zwölften optischen Signals an den dritten Eingangs/Ausgangs-Trenner und Ausgeben des elften optischen Signals an den vierten Eingangs/Ausgangs-Trenner;
der dritte Eingangs/Ausgangs-Trenner dazu konfiguriert ist, das zwölfte optische Signal an die polarisierungsempfindliche optische Komponente auszugeben;
der vierte Eingangs/Ausgangs-Trenner dazu konfiguriert ist, das elfte optische Signal an die polarisierungsempfindliche optische Komponente auszugeben;
die polarisierungsempfindliche optische Komponente konfiguriert ist zum: Erlangen eines dreizehnten optischen Signals auf Grundlage des elften optischen Signals, Erlangen eines vierzehnten optischen Signals auf Grundlage des zwölften optischen Signals und Ausgeben des dreizehnten optischen Signals und des vierzehnten optischen Signals an den dritten Eingangs/Ausgangs-Trenner und den vierten Eingangs/Ausgangs-Trenner;
der dritte Eingangs/Ausgangs-Trenner ferner dazu konfiguriert ist, das dreizehnte optische Signal an den vierten Eingangs/Ausgangs-Trenner auszugeben, und der vierte Eingangs/Ausgangs-Trenner ferner dazu konfiguriert ist, das vierzehnte optische Signal an den dritten Eingangs/Ausgangs-Trenner auszugeben, wobei das dreizehnte optische Signal und das vierzehnte optische Signal optische Signale sind, die in dem elften optischen Signal bzw. dem zwölften optischen Signal vorhanden sind und welche die Resonanzbedingung der polarisierungsempfindlichen optischen Komponente nicht erfüllen; und
das zweite Strahlkombinierteilmodul konfiguriert ist zum: Umwandeln des dreizehnten optischen Signals in ein fünfzehntes optisches Signal, dessen Polarisierungszustand von dem des vierzehnten optischen Signals verschieden ist, Durchführen einer Strahlkombination an dem vierzehnten optischen Signal und dem fünfzehnten optischen Signal und Ausgeben eines kombinierten optischen Signals unter Verwendung des zweiten Ausgangsendes.

9. Verfahren zum Verarbeiten optischer Signale mit einer optischen Komponente, umfassend ein erstes Strahlengangmodul (71) und eine polarisierungsempfindliche optische Komponente (21), wobei das erste Strahlengangmodul umfasst: ein erstes Strahlteilungsteilmodul (22), einen ersten Eingangs/Ausgangs-Trenner (23), ein erstes Strahlkombinierteilmodul (25) und einen zweiten Eingangs/Ausgangs-Trenner (24),
wobei das erste Strahlteilungsteilmodul einen Polarisierungsstrahlteiler (221) und einen Polarisierungsdreher (222) umfasst, wobei das erste Strahlkombinierteilmodul einen Polarisierungsstrahlkombinierer (251) und einen Polarisierungsdreher (252) umfasst,
und wobei die polarisierungsempfindliche optische Komponente ein Mikroringfilter (26) ist, wobei das Verfahren umfasst:
Empfangen (S1001), durch das erste Strahlteilungsteilmodul, eines optischen Eingangssignals unter Verwendung eines ersten Eingangsendes des ersten Strahlteilungsteilmoduls, Teilen des optischen Eingangssignals in ein erstes optisches Signal und ein zweites optisches Signal, deren Polarisierungszustände verschieden sind, und Umwandeln des ersten optischen Signals in ein drittes optisches Signal, dessen Polarisierungszustand gleich dem des zweiten optischen Signals ist;
Ausgeben, durch den ersten Eingangs/Ausgangs-Trenner, des dritten optischen Signals an die polarisierungsempfindliche optische Komponente;
Ausgeben, durch den zweiten Eingangs/Ausgangs-Trenner, des zweiten optischen Signals an die polarisierungsempfindliche optische Komponente;
Erlangen (S1002), durch die polarisierungsempfindliche optische Komponente, eines vierten optischen Signals auf Grundlage des zweiten optischen Signals und Erlangen eines fünften optischen Signals auf Grundlage des dritten optischen Signals und Ausgeben des vierten optischen Signals und des fünften Signals an den ersten Eingangs/Ausgangs-Trenner und den zweiten Eingangs/Ausgangs-Trenner;
Ausgeben, durch den ersten Eingangs/Ausgangs-Trenner, des vierten optischen Signals an das erste Strahlkombinierteilmodul;
Ausgeben, durch den zweiten Eingangs/Ausgangs-Trenner, des fünften optischen Signals an das erste Strahlkombinierteilmodul; und
Umwandeln (S1003), durch das erste Strahlkombinierteilmodul, des vierten optischen Signal in ein sechstes optisches Signal, dessen Polarisierungszustand von dem des fünften optischen Signals verschieden ist, Durchführen einer Strahlkombination an dem fünften optischen Signal und dem sechsten optischen Signal und Ausgeben eines kombinierten optischen Signals unter Verwendung eines ersten Ausgangsendes der optischen Komponente.

10. Verfahren nach Anspruch 9, wobei das vierte optische Signal und das fünfte optische Signal optische Signale sind, die in dem zweiten optischen Signal bzw. dem dritten optischen Signal vorhanden sind und die eine Resonanzbedingung der polarisierungsempfindlichen optischen Komponente erfüllen.

11. Verfahren nach Anspruch 10, wobei die optische Komponente ein zweites Strahlengangmodul (72) umfasst, wobei das zweite Strahlengangmodul umfasst: ein zweites Strahlteilungsteilmodul, einen dritten Eingangs/Ausgangs-Trenner (27), einen vierten Eingangs/Ausgangs-Trenner (28) und ein zweites Strahlkombinierteilmodul, wobei das zweite Strahlteilungsteilmodul einen Polarisierungsstrahlteiler (301) und einen Polarisierungsdreher (302) umfasst,
und wobei das zweite Strahlkombinierteilmodul einen Polarisierungsstrahlkombinierer (292) und einen Polarisierungsdreher (291) umfasst,
und das Verfahren ferner umfasst:
Erlangen (S1101), durch die polarisierungsempfindliche optische Komponente, eines siebten optischen Signals auf Grundlage des zweiten optischen Signals und Erlangen eines achten optischen Signals auf Grundlage des dritten optischen Signals, wobei das siebte optische Signal und das achte optische Signal optische Signale sind, die in dem zweiten optischen Signal bzw. dem dritten optischen Signal vorhanden sind und welche die Resonanzbedingung der polarisierungsempfindlichen optischen Komponente nicht erfüllen;
Ausgeben, durch den dritten Eingangs/Ausgangs-Trenner, des siebten optischen Signals an das zweite Strahlkombinierteilmodul;
Ausgeben, durch den vierten Eingangs/Ausgangs-Trenner, des achten optischen Signals an das zweite Strahlkombinierteilmodul; und
Umwandeln (S1102), durch das zweite Strahlkombinierteilmodul, des siebten optischen Signals in ein neuntes optisches Signal, dessen Polarisierungszustand von dem des achten optischen Signals verschieden ist, Durchführen einer Strahlkombination an dem achten optischen Signal und dem neunten optischen Signal und Ausgeben eines kombinierten optischen Signals unter Verwendung eines zweiten Ausgangsendes des zweiten Strahlkombinierteilmoduls.

12. Verfahren nach Anspruch 11, ferner umfassend:
Empfangen (S1201), durch das zweite Strahlteilungsteilmodul, eines optischen Eingangssignals unter Verwendung eines zweiten Eingangsendes des zweiten Strahlteilungsteilmoduls, Teilen des optischen Eingangssignals in ein zehntes optisches Signal und ein elftes optischen Signal, deren Polarisierungszustände verschieden sind, und Umwandeln des elften optischen Signals in ein zwölftes optisches Signal, dessen Polarisierungszustand gleich dem des elften optischen Signals ist;
Ausgeben, durch den dritten Eingangs/Ausgangs-Trenner, des zwölften optischen Signals an die polarisierungsempfindliche optische Komponente;
Ausgeben, durch den vierten Eingangs/Ausgangs-Trenner, des elften optischen Signals an die polarisierungsempfindliche optische Komponente;
Erlangen (S1202), durch die polarisierungsempfindliche optische Komponente, eines dreizehnten optischen Signals auf Grundlage des elften optischen Signals und Erlangen eines vierzehnten optischen Signals auf Grundlage des zwölften optischen Signals, wobei das dreizehnte optische Signal und das vierzehnte optische Signal optische Signale sind, die in dem elften optischen Signal bzw. dem zwölften optischen Signal vorhanden sind und welche die Resonanzbedingung der polarisierungsempfindlichen optischen Komponente erfüllen;
Ausgeben, durch den dritten Eingangs/Ausgangs-Trenner, des dreizehnten optischen Signals an den vierten Eingangs/Ausgangs-Trenner und Ausgeben, durch den vierten Eingangs/Ausgangs-Trenner, des vierzehnten optischen Signals an den dritten Eingangs/Ausgangs-Trenner, wobei das dreizehnte optische Signal und das vierzehnte optische Signal optische Signale sind, die in dem elften optischen Signal bzw. dem zwölften optischen Signal vorhanden sind und welche die Resonanzbedingung der polarisierungsempfindlichen optischen Komponente nicht erfüllen; und
Umwandeln (S1203), durch das zweite Strahlkombinierteilmodul, des dreizehnten optischen Signals in ein fünfzehntes optisches Signal, dessen Polarisierungszustand von dem des vierzehnten optischen Signals verschieden ist, Durchführen einer Strahlkombination an dem vierzehnten optischen Signal und dem fünfzehnten optischen Signal und Ausgeben eines kombinierten optischen Signals unter Verwendung des zweiten Ausgangsendes.

13. Verfahren nach Anspruch 12, ferner umfassend:
Erlangen (S1301), durch die polarisierungsempfindliche optische Komponente, eines sechzehnten optischen Signals auf Grundlage des elften optischen Signals und Erlangen eines siebzehnten optischen Signals auf Grundlage des zwölften optischen Signals, wobei das sechzehnte optische Signal und das siebzehnte optische Signal optische Signale sind, die in dem elften optischen Signal bzw. dem zwölften optischen Signal vorhanden sind und welche die Resonanzbedingung der polarisierungsempfindlichen optischen Komponente nicht erfüllen;
Ausgeben, durch den ersten Eingangs/Ausgangs-Trenner, des sechzehnten optischen Signals an das erste Strahlkombinierteilmodul und Ausgeben, durch den zweiten Eingangs/Ausgangs-Trenner, des siebzehnten optischen Signals an das erste Strahlkombinierteilmodul, wobei das sechzehnte optische Signal und das siebzehnte optische Signal optische Signale sind, die in dem elften optischen Signal bzw. dem zwölften optischen Signal vorhanden sind und welche die Resonanzbedingung der polarisierungsempfindlichen optischen Komponente nicht erfüllen; und
Umwandeln (S1302), durch das erste Strahlkombinierteilmodul, des sechzehnten optischen Signal in ein achtzehntes optisches Signal, dessen Polarisierungszustand von dem des siebzehnten optischen Signals verschieden ist, Durchführen einer Strahlkombination an dem siebzehnten optischen Signal und dem achtzehnten optischen Signal und Ausgeben eines kombinierten optischen Signals unter Verwendung des ersten Ausgangsendes.

14. Verfahren nach Anspruch 9, wobei das vierte optische Signal und das fünfte optische Signal optische Signale sind, die in dem zweiten optischen Signal bzw. dem dritten optischen Signal vorhanden sind und die eine Resonanzbedingung der polarisierungsempfindlichen optischen Komponente nicht erfüllen.

15. Verfahren nach Anspruch 14, wobei die optische Komponente umfasst: ein zweites Strahlengangmodul (72), wobei das zweite Strahlengangmodul umfasst; ein zweites Strahlteilungsteilmodul, einen dritten Eingangs/Ausgangs-Trenner (27), einen vierten Eingangs/Ausgangs-Trenner (28) und ein zweites Strahlkombinierteilmodul, wobei das zweite Strahlteilungsteilmodul einen Polarisierungsstrahlteiler (301) und einen Polarisierungsdreher (302) umfasst und wobei das zweite Strahlkombinierteilmodul einen Polarisierungsstrahlkombinierer (292) und einen Polarisierungsdreher (291) umfasst,
und wobei das Verfahren ferner umfasst:
Erlangen (S1401), durch die polarisierungsempfindliche optische Komponente, eines siebten optischen Signals auf Grundlage des zweiten optischen Signals und Erlangen eines achten optischen Signals auf Grundlage des dritten optischen Signals, wobei das siebte optische Signal und das achte optische Signal optische Signale sind, die in dem zweiten optischen Signal bzw. dem dritten optischen Signal vorhanden sind und welche die Resonanzbedingung der polarisierungsempfindlichen optischen Komponente erfüllen;
Ausgeben, durch den dritten Eingangs/Ausgangs-Trenner, des siebten optischen Signals an das zweite Strahlkombinierteilmodul;
Ausgeben, durch den vierten Eingangs/Ausgangs-Trenner, des achten optischen Signals an das zweite Strahlkombinierteilmodul; und
Umwandeln (S1402), durch das zweite Strahlkombinierteilmodul, des siebten optischen Signals in ein neuntes optisches Signal, dessen Polarisierungszustand von dem des achten optischen Signals verschieden ist, Durchführen einer Strahlkombination an dem achten optischen Signal und dem neunten optischen Signal und Ausgeben eines kombinierten optischen Signals unter Verwendung eines zweiten Ausgangsendes des zweiten Strahlkombinierteilmoduls.

## Revendications

1. Composant optique, comprenant : un premier module de trajet optique (71) et un composant optique sensible à la polarisation (21) ,
dans lequel le premier module de trajet optique comprend : un premier sous-module de dédoublement de faisceau (22), un premier séparateur d'entrée/sortie (23), un premier sous-module de combinaison de faisceau (25), et un deuxième séparateur d'entrée/sortie (24), dans lequel le premier sous-module de dédoublement de faisceau comprend un dédoubleur de faisceau de polarisation (221) et un rotateur de polarisation (222), dans lequel le premier sous-module de combinaison de faisceau comprend un combinateur de faisceau de polarisation (251) et un rotateur de polarisation (252), et dans lequel le composant optique sensible à la polarisation est un filtre à micro-anneau (26) ;
dans lequel
le premier sous-module de dédoublement de faisceau reçoit un signal optique d'entrée en utilisant une première extrémité d'entrée, et est conçu pour : diviser le signal optique d'entrée en un premier signal optique et un deuxième signal optique dont les états de polarisation sont différents, convertir le premier signal optique en un troisième signal optique dont l'état de polarisation est le même que celui du deuxième signal optique, produire en sortie le troisième signal optique au premier séparateur d'entrée/sortie, et produire en sortie le deuxième signal optique au deuxième séparateur d'entrée/sortie ;
le premier séparateur d'entrée/sortie est conçu pour produire en sortie le troisième signal optique au composant optique sensible à la polarisation ;
le deuxième séparateur d'entrée/sortie est conçu pour produire en sortie le deuxième signal optique au composant optique sensible à la polarisation ;
le composant optique sensible à la polarisation est conçu pour :
obtenir un quatrième signal optique sur la base du deuxième signal optique, obtenir un cinquième signal optique sur la base du troisième signal optique, et produire en sortie le quatrième signal optique et le cinquième signal optique au premier séparateur d'entrée/sortie et au deuxième séparateur d'entrée/sortie ;
le premier séparateur d'entrée/sortie est en outre conçu pour produire en sortie le quatrième signal optique au premier sous-module de combinaison de faisceau, et le deuxième séparateur d'entrée/sortie est en outre conçu pour produire en sortie le cinquième signal optique au premier sous-module de combinaison de faisceau ; et
le premier sous-module de combinaison de faisceau est conçu pour : convertir le quatrième signal optique en un sixième signal optique dont l'état de polarisation est différent de celui du cinquième signal optique, effectuer une combinaison de faisceau sur le cinquième signal optique et le sixième signal optique, et produire en sortie un signal optique combiné en utilisant une première extrémité de sortie.

2. Composant optique selon la revendication 1, dans lequel le quatrième signal optique et le cinquième signal optique sont respectivement des signaux optiques qui sont dans le deuxième signal optique et le troisième signal optique et qui satisfont à une condition de résonance du composant optique sensible à la polarisation.

3. Composant optique selon la revendication 2, comprenant en outre : un second module de trajet optique (72), dans lequel le second module de trajet optique comprend : un second sous-module de dédoublement de faisceau, un troisième séparateur d'entrée/sortie (27), un quatrième séparateur d'entrée/sortie (28), et un second sous-module de combinaison de faisceau,
dans lequel le second sous-module de dédoublement de faisceau comprend un dédoubleur de faisceau de polarisation (301) et un rotateur de polarisation (302),
et dans lequel le second sous-module de combinaison de faisceau comprend un combinateur de faisceau de polarisation (292) et un rotateur de polarisation (291) ;
dans lequel
le composant optique sensible à la polarisation est en outre conçu pour : obtenir un septième signal optique sur la base du deuxième signal optique, obtenir un huitième signal optique sur la base du troisième signal optique, et produire en sortie respectivement le septième signal optique et le huitième signal optique au troisième séparateur d'entrée/sortie et au quatrième séparateur d'entrée/sortie, dans lequel le septième signal optique et le huitième signal optique sont respectivement des signaux optiques qui sont dans le deuxième signal optique et le troisième signal optique et qui ne satisfont pas à la condition de résonance du composant optique sensible à la polarisation ;
le troisième séparateur d'entrée/sortie est conçu pour produire en sortie le septième signal optique au second sous-module de combinaison de faisceau ;
le quatrième séparateur d'entrée/sortie est conçu pour produire en sortie le huitième signal optique au second sous-module de combinaison de faisceau ; et
le second sous-module de combinaison de faisceau est conçu pour : convertir le septième signal optique en un neuvième signal optique dont l'état de polarisation est différent de celui du huitième signal optique, effectuer une combinaison de faisceau sur le huitième signal optique et le neuvième signal optique, et produire en sortie un signal optique combiné en utilisant une seconde extrémité de sortie.

4. Composant optique selon la revendication 3, dans lequel le second sous-module de dédoublement de faisceau reçoit un signal optique d'entrée en utilisant une seconde extrémité d'entrée, et est conçu pour : diviser le signal optique d'entrée en un dixième signal optique et un onzième signal optique dont les états de polarisation sont différents, convertir le dixième signal optique en un douzième signal optique dont l'état de polarisation est le même que celui du onzième signal optique, produire en sortie le douzième signal optique au troisième séparateur d'entrée/sortie, et produire en sortie le onzième signal optique au quatrième séparateur d'entrée/sortie ;
le troisième séparateur d'entrée/sortie est conçu pour produire en sortie le douzième signal optique au composant optique sensible à la polarisation ;
le quatrième séparateur d'entrée/sortie est conçu pour produire en sortie le onzième signal optique au composant optique sensible à la polarisation ;
le composant optique sensible à la polarisation est conçu pour :
obtenir un treizième signal optique sur la base du onzième signal optique, obtenir un quatorzième signal optique sur la base du douzième signal optique, et produire en sortie le treizième signal optique et le quatorzième signal optique au troisième séparateur d'entrée/sortie et au quatrième séparateur d'entrée/sortie ;
le troisième séparateur d'entrée/sortie est en outre conçu pour produire en sortie le treizième signal optique au second sous-module de combinaison de faisceau, et le quatrième séparateur d'entrée/sortie est en outre conçu pour produire en sortie le quatorzième signal optique au second sous-module de combinaison de faisceau, dans lequel le treizième signal optique et le quatorzième signal optique sont respectivement des signaux optiques qui sont dans le onzième signal optique et le douzième signal optique et qui satisfont à la condition de résonance du composant optique sensible à la polarisation ; et
le second sous-module de combinaison de faisceau est conçu pour : convertir le treizième signal optique en un quinzième signal optique dont l'état de polarisation est différent de celui du quatorzième signal optique, effectuer une combinaison de faisceau sur le quatorzième signal optique et le quinzième signal optique, et produire en sortie un signal optique combiné en utilisant la seconde extrémité de sortie.

5. Composant optique selon la revendication 4, dans lequel le composant optique sensible à la polarisation est conçu pour :
obtenir un seizième signal optique sur la base du onzième signal optique, obtenir un dix-septième signal optique sur la base du douzième signal optique, et produire en sortie le seizième signal optique et le dix-septième signal optique au premier séparateur d'entrée/sortie et au deuxième séparateur d'entrée/sortie ;
le premier séparateur d'entrée/sortie est en outre conçu pour produire en sortie le seizième signal optique au premier sous-module de combinaison de faisceau, et le deuxième séparateur d'entrée/sortie est en outre conçu pour produire en sortie le dix-septième signal optique au premier sous-module de combinaison de faisceau, dans lequel le seizième signal optique et le dix-septième signal optique sont respectivement des signaux optiques qui sont dans le onzième signal optique et le douzième signal optique et qui ne satisfont pas à la condition de résonance du composant optique sensible à la polarisation ; et
le premier sous-module de combinaison de faisceau est conçu pour : convertir le seizième signal optique en un dix-huitième signal optique dont l'état de polarisation est différent de celui du dix-septième signal optique, effectuer une combinaison de faisceau sur le dix-septième signal optique et le dix-huitième signal optique, et produire en sortie un signal optique combiné en utilisant la première extrémité de sortie.

6. Composant optique selon la revendication 1, dans lequel le quatrième signal optique et le cinquième signal optique sont respectivement des signaux optiques qui sont dans le deuxième signal optique et le troisième signal optique et qui ne satisfont pas à une condition de résonance du composant optique sensible à la polarisation.

7. Composant optique selon la revendication 6, comprenant en outre : un second module de trajet optique (72), dans lequel le second module de trajet optique comprend : un second sous-module de dédoublement de faisceau, un troisième séparateur d'entrée/sortie (27), un quatrième séparateur d'entrée/sortie (28) et un second sous-module de combinaison de faisceau, dans lequel le second sous-module de dédoublement de faisceau comprend un dédoubleur de faisceau de polarisation (301) et un rotateur de polarisation (302), et dans lequel le second sous-module de combinaison de faisceau comprend un combinateur de faisceau de polarisation (292) et un rotateur de polarisation (291) ;
dans lequel
le composant optique sensible à la polarisation obtient un septième signal optique sur la base du deuxième signal optique, obtient un huitième signal optique sur la base du troisième signal optique, et produit respectivement en sortie le septième signal optique et le huitième signal optique au troisième séparateur d'entrée/sortie et au quatrième séparateur d'entrée/sortie, dans lequel le septième signal optique et le huitième signal optique sont respectivement des signaux optiques qui sont dans le deuxième signal optique et le troisième signal optique et qui satisfont à la condition de résonance du composant optique sensible à la polarisation ;
le troisième séparateur d'entrée/sortie est conçu pour produire en sortie le septième signal optique au second sous-module de combinaison de faisceau ;
le quatrième séparateur d'entrée/sortie est conçu pour produire en sortie le huitième signal optique au second sous-module de combinaison de faisceau ; et
le second sous-module de combinaison de faisceau est conçu pour : convertir le septième signal optique en un neuvième signal optique dont l'état de polarisation est différent de celui du huitième signal optique, effectuer une combinaison de faisceau sur le huitième signal optique et le neuvième signal optique, et produire en sortie un signal optique combiné en utilisant une seconde extrémité de sortie.

8. Composant optique selon la revendication 7, dans lequel le second sous-module de dédoublement de faisceau reçoit un signal optique d'entrée en utilisant une seconde extrémité d'entrée, et est conçu pour : diviser le signal optique d'entrée en un dixième signal optique et un onzième signal optique dont les états de polarisation sont différents, convertir le dixième signal optique en un douzième signal optique dont l'état de polarisation est le même que celui du onzième signal optique, produire en sortie le douzième signal optique au troisième séparateur d'entrée/sortie, et produire en sortie le onzième signal optique au quatrième séparateur d'entrée/sortie ;
le troisième séparateur d'entrée/sortie est conçu pour produire en sortie le douzième signal optique au composant optique sensible à la polarisation ;
le quatrième séparateur d'entrée/sortie est conçu pour produire en sortie le onzième signal optique au composant optique sensible à la polarisation ;
le composant optique sensible à la polarisation est conçu pour :
obtenir un treizième signal optique sur la base du onzième signal optique, obtenir un quatorzième signal optique sur la base du douzième signal optique, et produire en sortie le treizième signal optique et le quatorzième signal optique au troisième séparateur d'entrée/sortie et au quatrième séparateur d'entrée/sortie ;
le troisième séparateur d'entrée/sortie est en outre conçu pour produire en sortie le treizième signal optique au quatrième séparateur d'entrée/sortie, et le quatrième séparateur d'entrée/sortie est en outre conçu pour produire en sortie le quatorzième signal optique au troisième séparateur d'entrée/sortie, dans lequel le treizième signal optique et le quatorzième signal optique sont respectivement des signaux optiques qui sont dans le onzième signal optique et le douzième signal optique et qui ne satisfont pas à la condition de résonance du composant optique sensible à la polarisation ; et
le second sous-module de combinaison de faisceau est conçu pour : convertir le treizième signal optique en un quinzième signal optique dont l'état de polarisation est différent de celui du quatorzième signal optique, effectuer une combinaison de faisceau sur le quatorzième signal optique et le quinzième signal optique, et produire en sortie un signal optique combiné en utilisant la seconde extrémité de sortie.

9. Procédé de traitement de signal optique avec un composant optique comprenant un premier module de trajet optique (71) et un composant optique sensible à la polarisation (21),
dans lequel le premier module de trajet optique comprend : un premier sous-module de dédoublement de faisceau (22), un premier séparateur d'entrée/sortie (23), un premier sous-module de combinaison de faisceau (25), et un deuxième séparateur d'entrée/sortie (24),
dans lequel le premier sous-module de dédoublement de faisceau comprend un dédoubleur de faisceau de polarisation (221) et un rotateur de polarisation (222), dans lequel le premier sous-module de combinaison de faisceau comprend un combinateur de faisceau de polarisation (251) et un rotateur de polarisation (252),
et dans lequel le composant optique sensible à la polarisation est un filtre à micro-anneau (26), dans lequel le procédé comprend :
la réception (S1001), par le premier sous-module de dédoublement de faisceau, d'un signal optique d'entrée en utilisant une première extrémité d'entrée du premier sous-module de dédoublement de faisceau, la division du signal optique d'entrée en un premier signal optique et un deuxième signal optique dont les états de polarisation sont différents, et la conversion du premier signal optique en un troisième signal optique dont l'état de polarisation est le même que celui du deuxième signal optique ;
la délivrance en sortie, par le premier séparateur d'entrée/sortie, du troisième signal optique au composant optique sensible à la polarisation ;
la délivrance en sortie, par le deuxième séparateur d'entrée/sortie, du deuxième signal optique au composant optique sensible à la polarisation ;
l'obtention (S1002), par le composant optique sensible à la polarisation, d'un quatrième signal optique sur la base du deuxième signal optique, et l'obtention d'un cinquième signal optique sur la base du troisième signal optique et la délivrance en sortie du quatrième signal optique et du cinquième signal optique au premier séparateur d'entrée/sortie et au deuxième séparateur d'entrée/sortie ;
la délivrance en sortie, par le premier séparateur d'entrée/sortie, du quatrième signal optique au premier sous-module de combinaison de faisceau ;
la délivrance en sortie, par le deuxième séparateur d'entrée/sortie, du cinquième signal optique au premier sous-module de combinaison de faisceau ; et
la conversion (S1003), par le premier sous-module de combinaison de faisceau, du quatrième signal optique en un sixième signal optique dont l'état de polarisation est différent de celui du cinquième signal optique, la réalisation d'une combinaison de faisceau sur le cinquième signal optique et le sixième signal optique, et la délivrance en sortie d'un signal optique combiné en utilisant une première extrémité de sortie du composant optique.

10. Procédé selon la revendication 9, dans lequel le quatrième signal optique et le cinquième signal optique sont respectivement des signaux optiques qui sont dans le deuxième signal optique et le troisième signal optique et qui satisfont à une condition de résonance du composant optique sensible à la polarisation.

11. Procédé selon la revendication 10, dans lequel le composant optique comprend un second module de trajet optique (72), dans lequel le second module de trajet optique comprend : un second sous-module de dédoublement de faisceau, un troisième séparateur d'entrée/sortie (27), un quatrième séparateur d'entrée/sortie (28), et un second sous-module de combinaison de faisceau, dans lequel le second sous-module de dédoublement de faisceau comprend un dédoubleur de faisceau de polarisation (301) et un rotateur de polarisation (302),
et dans lequel le second sous-module de combinaison de faisceau comprend un combinateur de faisceau de polarisation (292) et un rotateur de polarisation (291), et le procédé comprend en outre :
l'obtention (S1101), par le composant optique sensible à la polarisation, d'un septième signal optique sur la base du deuxième signal optique, et l'obtention d'un huitième signal optique sur la base du troisième signal optique, dans lequel le septième signal optique et le huitième signal optique sont respectivement des signaux optiques qui sont dans le deuxième signal optique et le troisième signal optique et qui ne satisfont pas à la condition de résonance du composant optique sensible à la polarisation ;
la délivrance en sortie, par le troisième séparateur d'entrée/sortie, du septième signal optique au second sous-module de combinaison de faisceau ;
la délivrance en sortie, par le quatrième séparateur d'entrée/sortie, du huitième signal optique au second sous-module de combinaison de faisceau ; et
la conversion (S1102), par le second sous-module de combinaison de faisceau, du septième signal optique en un neuvième signal optique dont l'état de polarisation est différent de celui du huitième signal optique, la réalisation d'une combinaison de faisceau sur le huitième signal optique et le neuvième signal optique, et la délivrance en sortie d'un signal optique combiné en utilisant une seconde extrémité de sortie du second sous-module de combinaison de faisceau.

12. Procédé selon la revendication 11, comprenant en outre :
la réception (S1201), par le second sous-module de dédoublement de faisceau, d'un signal optique d'entrée en utilisant une seconde extrémité d'entrée du second sous-module de dédoublement de faisceau, la division du signal optique d'entrée en un dixième signal optique et un onzième signal optique dont les états de polarisation sont différents, et la conversion du dixième signal optique en un douzième signal optique dont l'état de polarisation est le même que celui du onzième signal optique ;
la délivrance en sortie, par le troisième séparateur d'entrée/sortie, du douzième signal optique au composant optique sensible à la polarisation ;
la délivrance en sortie, par le quatrième séparateur d'entrée/sortie, du onzième signal optique au composant optique sensible à la polarisation ;
l'obtention (S1202), par le composant optique sensible à la polarisation, d'un treizième signal optique sur la base du onzième signal optique, et l'obtention d'un quatorzième signal optique sur la base du douzième signal optique, dans lequel le treizième signal optique et le quatorzième signal optique sont respectivement des signaux optiques qui sont dans le onzième signal optique et le douzième signal optique et qui satisfont à la condition de résonance du composant optique sensible à la polarisation ; et
la délivrance en sortie, par le troisième séparateur d'entrée/sortie, du treizième signal optique au quatrième séparateur d'entrée/sortie, et la délivrance en sortie, par le quatrième séparateur d'entrée/sortie, du quatorzième signal optique au troisième séparateur d'entrée/sortie, dans lequel le treizième signal optique et le quatorzième signal optique sont respectivement des signaux optiques qui sont dans le onzième signal optique et le douzième signal optique et qui ne satisfont pas à la condition de résonance du composant optique sensible à la polarisation ; et
la conversion (S1203), par le second sous-module de combinaison de faisceau, du treizième signal optique en un quinzième signal optique dont l'état de polarisation est différent de celui du quatorzième signal optique, la réalisation d'une combinaison de faisceau sur le quatorzième signal optique et le quinzième signal optique, et la délivrance en sortie d'un signal optique combiné en utilisant la seconde extrémité de sortie.

13. Procédé selon la revendication 12, comprenant en outre :
l'obtention (S1301), par le composant optique sensible à la polarisation, d'un seizième signal optique sur la base du onzième signal optique, et l'obtention d'un dix-septième signal optique sur la base du douzième signal optique, dans lequel le seizième signal optique et le dix-septième signal optique sont respectivement des signaux optiques qui sont dans le onzième signal optique et le douzième signal optique et qui ne satisfont pas à la condition de résonance du composant optique sensible à la polarisation ;
la délivrance en sortie, par le premier séparateur d'entrée/sortie, du seizième signal optique au premier sous-module de combinaison de faisceau, et la délivrance en sortie, par le deuxième séparateur d'entrée/sortie, du dix-septième signal optique au premier sous-module de combinaison de faisceau, dans lequel le seizième signal optique et le dix-septième signal optique sont respectivement des signaux optiques qui sont dans le onzième signal optique et le douzième signal optique et qui ne satisfont pas à la condition de résonance du composant optique sensible à la polarisation ; et
la conversion (S1302), par le premier sous-module de combinaison de faisceau, du seizième signal optique en un dix-huitième signal optique dont l'état de polarisation est différent de celui du dix-septième signal optique, la réalisation d'une combinaison de faisceau sur le dix-septième signal optique et le dix-huitième signal optique, et la délivrance en sortie d'un signal optique combiné en utilisant la première extrémité de sortie.

14. Procédé selon la revendication 9, dans lequel le quatrième signal optique et le cinquième signal optique sont respectivement des signaux optiques qui sont dans le deuxième signal optique et le troisième signal optique et qui ne satisfont pas à une condition de résonance du composant optique sensible à la polarisation.

15. Procédé selon la revendication 14, dans lequel le composant optique comprend : un second module de trajet optique (72), dans lequel le second module de trajet optique comprend : un second sous-module de dédoublement de faisceau, un troisième séparateur d'entrée/sortie (27), un quatrième séparateur d'entrée/sortie (28), et un second sous-module de combinaison de faisceau, dans lequel le second sous-module de dédoublement de faisceau comprend un dédoubleur de faisceau de polarisation (301) et un rotateur de polarisation (302), et dans lequel le second sous-module de combinaison de faisceau comprend un combinateur de faisceau de polarisation (292) et un rotateur de polarisation (291), et dans lequel le procédé comprend en outre :
l'obtention (S1401), par le composant optique sensible à la polarisation, d'un septième signal optique sur la base du deuxième signal optique, et l'obtention d'un huitième signal optique sur la base du troisième signal optique, dans lequel le septième signal optique et le huitième signal optique sont respectivement des signaux optiques qui sont dans le deuxième signal optique et le troisième signal optique et qui satisfont à la condition de résonance du composant optique sensible à la polarisation ;
la délivrance en sortie, par le troisième séparateur d'entrée/sortie, du septième signal optique au second sous-module de combinaison de faisceau ;
la délivrance en sortie, par le quatrième séparateur d'entrée/sortie, du huitième signal optique au second sous-module de combinaison de faisceau ; et
la conversion (S1402), par le second sous-module de combinaison de faisceau, du septième signal optique en un neuvième signal optique dont l'état de polarisation est différent de celui du huitième signal optique, la réalisation d'une combinaison de faisceau sur le huitième signal optique et le neuvième signal optique, et la délivrance en sortie d'un signal optique combiné en utilisant une seconde extrémité de sortie du second sous-module de combinaison de faisceau.
